Europäisches Patentamt

European Patent Office

Office européen des brevets

(19)

(11) Numéro de publication : **0 419 644 B1**

(12) **FASCICULE DE BREVET EUROPEEN**

(45) Date de publication du fascicule du brevet :
**19.01.94 Bulletin 94/03**

(51) Int. Cl.⁵ : **G05D 1/08**

(21) Numéro de dépôt : **90907100.3**

(22) Date de dépôt : **13.04.90**

(86) Numéro de dépôt international :
**PCT/FR90/00277**

(87) Numéro de publication internationale :
**WO 90/13077 01.11.90 Gazette 90/25**

(54) **PROCEDE AUTO-ADAPTATIF DE COMMANDE EN PILOTAGE D'UN SYSTEME PHYSIQUE.**

(30) Priorité : **18.04.89 FR 8905145**

(43) Date de publication de la demande :
**03.04.91 Bulletin 91/14**

(45) Mention de la délivrance du brevet :
**19.01.94 Bulletin 94/03**

(84) Etats contractants désignés :
**DE ES GB IT NL SE**

(56) Documents cités :
**JOURNAL OF GUIDANCE AND CONTROL, vol.
11, no. 1, 1 janvier 1988, New York, US, pages
72-79; M.H.VERHAGEN:** "Robust Adaptative
Flight-Path Reconstruction Technique for
Nonsteady Longitudinal Flight Test Maneuvers"
**1985 AMERICAN CONTROL CONFERENCE,
vol. 1, 19 juin 1985, Boston,MA, pages 18-26;
W.E.LARIMORE; W.M.LEBEW :** "Identification
of Parameters and Model Structure for Missile
Aerodynamics"

(56) Documents cités :
**JOURNAL OF GUIDANCE AND CONTROL, vol.
4, no. 2, 10 décembre 1979, Huntsville, Ala.,
pages 116-125; C.D.JOHNSON:**
"Discrete-Time Disturbance-Accommodation
Control Theory with Applications to Missile
Digital Control"
**JOURNAL OF GUIDANCE AND CONTROL, vol.
8, no. 4, 1 juillet 1985, New York, US, pages
417-425; A.E.BRYSON Jr.:** "New Concepts in
Control Theory, 1959-1984"
**PROCEEDINGS IEEE CONTROL SYSTEMS
SOCIETY, 24 septembre 1986, Arlington, Virg.,
pages 95-101; M.G.SAFONOV; R.Y.CHIANG:**
"Third Symposium on computer-aided Control
System design"

(73) Titulaire : **AEROSPATIALE Société Nationale
Industrielle
37, Boulevard de Montmorency
F-75781 Paris Cédex 16 (FR)**

(72) Inventeur : **MARTIN, Alain
Allée Pasteur Le Val-Fleuri
F-06700 S.-Laurent-du-Var (FR)**
Inventeur : **HOUDEMONT, Joel
11, allée Paul-Clément
F-06210 Mandelieu (FR)**
Inventeur : **JAHIER, Jean-Philippe
Avenue de France
F-06400 Cannes (FR)**

(74) Mandataire : **Rinuy, Santarelli
14, avenue de la Grande Armée
F-75017 Paris (FR)**

EP 0 419 644 B1

Jouve, 18, rue Saint-Denis, 75001 PARIS

## Description

L'invention concerne une commande autoadaptative pour un système mécanique à excitation persistante, mal connu ou situé dans un environnement mal connu (stabilité d'asservissement non garantie en boucle fermée), tel qu'un engin volant à pilotage automatique (engin aérodynamique), pour lequel on peut définir, au moins autour de points de fonctionnement, des relations de comportement sous la forme d'équations différentielles linéaires du second ordre.

Dans le domaine aéronautique, le contrôle des engins a toujours posé de grandes difficultés techniques : que l'engin soit du type avion, lanceur ou missile, la complexité des phénomènes physiques, surtout ceux liés à l'aérodynamique, font que les modèles proposés, même les plus sophistiqués, sont suffisamment éloignés de la réalité pour que l'on puisse mettre sérieusement en doute la robustesse des lois de contrôle synthétisées avec ces modèles.

Les caractéristiques physiques essentielles des engins aéronautiques, causes de ces erreurs de modèles importantes et du manque éventuel de robustesse des lois sont les suivantes :

a. La théorie sur l'aérodynamique est très grossière et insuffisante, surtout pour des engins très manoeuvrants : les phénomènes deviennent complètement non linéaires et non stationnaires en cas de forte incidence (effets de turbulences) ;

b. L'engin est souvent instable en boucle ouverte ;

c. Les perturbations atmosphériques sont importantes (vents, rafales..) ;

d. Les paramètres essentiels varient énormément avec, par exemple, l'altitude de l'engin ou sa vitesse; les engins aéronautiques sont des systèmes physiques, par nature, fortement instationnaires (surtout les missiles) ;

e. Il y a méconnaissance importante des coordonnees des points d'application des forces (force de poussée, force d'origine aérodynamique, poids de l'engin) pouvant créer des dispersions considérables sur les couples induits et par voie de conséquence sur les valeurs linéarisées du modèle ;

f. Il existe des modes dynamiques non modélisés comme les déformations de l'engin dues à sa souplesse (modes de flexion, de torsion ...) ou les effets des couples gyroscopiques par exemple (effets non linéaires).

Le problème ainsi posé semble être insoluble par des méthodes classiques, d'autant plus que les lois de contrôle proposées à ce jour sans succès sont déjà réputées pour leur robustesse (lois de contrôle à critère quadratique). On ne connaît actuellement aucun jeu de gains ni aucune structure de loi de commande qui permettrait d'assurer ne serait-ce que la stabilité du système en boucle fermée, si l'on suppose connaître aucune information complémentaire sur l'évolution des paramètres lors de son fonctionnement.

Pour un tel engin, aucune structure classique de loi de commande ne convient donc pour le contrôler d'une façon correcte, c'est-à-dire en respectant les spécifications techniques du cahier des charges.

En effet, on est amené en pratique, pour pouvoir respecter les spécifications du cahier des charges dans des cas où interviennent des dispersions paramétriques, à augmenter, par exemple, très fortement la valeur des gains de commande (c'est une pratique très courante) ce qui permet théoriquement dans un contexte parfaitement linéaire, de contrer les dispersions affichées. La pulsation du système en boucle fermée est alors élevée indiquant que la boucle de commande a une large bande passante.

Malheureusement, cette façon de procéder, qui peut paraître séduisante au premier abord, atteint rapidement sa limite : le système étant en réalité non linéaire, les non-linéarités sont justement excitées par la boucle de commande qui est alors trop raide. On peut citer comme exemple significatif les non-linéarités dues aux couples gyroscopiques, présents dans tout système en rotation, qui imposent une loi de commande la moins rapide possible pour limiter leur influence néfaste sur la stabilité.

Des non-linéarités de commande sont en outre toujours présentes dans tout système réel, du fait notamment que la valeur de commande réellement appliquée est physiquement bornée, soit au moyen d'une butée mécanique (vérin) ou d'une butée électrique (saturation en tension d'un amplificateur) par exemple. La saturation en position de la commande n'est pas la seule non-linéarité présente dans la boucle de commande puisqu'une saturation en vitesse intervient également (vérin). C'est également pour éviter d'atteindre ces bornes, qu'il faut des gains de commande raisonnables, sous peine de détériorer rapidement le mécanisme de commande du système considéré.

Après avoir ainsi fixé des gains de commande maximum tolérables, on peut déterminer si la loi de commande, avec de tels gains, peut accepter les dispersions paramétriques. Mais si ce n'est pas le cas, on ne peut que constater simplement l'échec de la loi de contrôle qui est ainsi jugée insuffisamment robuste pour prétendre contrôler le système.

Pour pallier cet échec, il est parfois suffisant de modifier le mécanisme de commande dans le sens de l'obtention d'une plus grande plage linéaire : butée en position éloignée, saturation de vitesse de commande plus élevée. Mais une telle solution induit, pour le mécanisme de commande ainsi modifié dans ses structures les plus profondes, un coût global plus élevé (parfois rédhibitoire) puisque l'on est obligé de surdimensionner le mécanisme (vérins de puissance, amplificateurs électroniques de puissance) ce qui implique un surplus d'études, de volume, de poids, de contraintes technologiques...

La seule issue possible semble donc être d'avoir au moins une connaissance minimale sur l'évolution de certains paramètres essentiels du système permettant tant bien que mal de gérer les non stationnarités et les dispersions.

Une commande adaptative peut permettre, par définition, d'acquérir ce minimum de connaissance indispensable et apparaît donc comme une voie intéressante.

L'invention vise à garantir la stabilité d'un engin en palliant les inconvénients des solutions précitées, pour un niveau de performances comparable, sinon meilleur, grâce à une telle commande adaptative permettant d'éviter le recours à un tel surdimensionnement des équipements, lesquels pourront donc être calculés sur un point moyen de fonctionnement, en se fondant sur des dispersions paramétriques nettement moins importantes que dans les solutions connues ; une telle commande autoadaptative peut donc contribuer de manière significative à la baisse des coûts de fabrication puis d'exploitation du système mécanique à asservir.

Elle enseigne pour cela d'appliquer à l'organe de manoeuvre du système à piloter, en plus des ordres de commande normalement calculés, des signaux périodiques d'excitation en bande étroite qui permettent un recalage d'un modèle de connaissance paramétrique en temps réel, avec une erreur maximale spécifiée hors ligne (prédéterminée). Les signaux périodiques peuvent être optimisés autant que possible, aussi bien en amplitude qu'en fréquence, selon un compromis spécifié à l'avance entre cette erreur maximale spécifiée et l'influence de ces signaux sur la grandeur à asservir.

L'invention propose un procédé de commande en pilotage en régime discret d'un système physique dont une grandeur de sortie $\theta$ est commandée par une grandeur $\beta_C$ appliquée à un actionneur selon une loi de commande synthétisée à partir d'une équation différentielle linéaire du second ordre :

$$\ddot{\theta} = A_6.\theta + K_1\beta + \varepsilon$$

où    $A_6$ est un paramètre appelé raideur,

        $K_1$ est un paramètre appelé efficacité,

        $\varepsilon$ est un terme de perturbation stochastique, l'un au moins des paramètres $A_6$ et $K_1$, étant mal connu, selon lequel on relève, avec une période d'échantillonnage T, des mesures $Y_k$ de la grandeur de sortie $\theta$ tandis que l'on élabore dans un calculateur des signaux de commande $\beta_{ck}$ que l'on applique à l'actionneur, et selon lequel on décrit le comportement du système par une relation matricielle $\dot{X} = AX + B.\beta_c + W$ où X est un vecteur regroupant au moins $\theta$, $\beta$ et leurs dérivés et où W est un bruit blanc.

. Préalablement au pilotage :

    - on établit une relation paramétrique linéaire en les paramètres $A_6$ et $K_1$ du type :

$$E(q^{-1}).Y_k = A'(q^{-1}).Y_k.A_6 + N'(q^{-1}).\beta_{ck}.K_1 + \frac{C(q^{-1})}{D(q^{-1})}.e_k$$

        où :

           . $e_k$ est le processus d'innovation résultant d'un filtre de KALMAN fondé sur ladite équation matricielle de comportement,

           . $E(q^{-1})$, $A'(q^{-1})$, $N'(q^{-1})$ sont des polynômes de l'opérateur retard $q^{-1}$, d'ordres au plus égaux à la dimension du vecteur X,

           . $C(q^{-1})$ est le polynôme caractéristique dudit filtre de KALMAN,

           . $D(q^{-1})$ est le polynôme caractéristique des modes non commandables excités par W.

    - on calcule les valeurs des coefficients constants $e_1$ de $E(q^{-1})$, $a'_1$ de $A'(q^{-1})$, $b'_1$ de $N'(q^{-1})$,

    - on estime une plage de valeurs possibles pour ce paramètre malconnu au cours du pilotage,

    - on construit une table d'interpolation donnant pour plusieurs de ces valeurs possibles l'amplitude $\varepsilon_1$ et la pulsation $\omega_1$ d'au moins une composante harmonique à introduire par addition dans le signal de commande,

    - on choisit un modèle de variation pour au moins le paramètre supposé mal connu que l'on écrit sous la forme

$$\dot{XX} = AA.XX + e$$

où XX est un vecteur de dimension au moins égale à 1 et on établit une équation de RICCATI discrète fondée sur ce modèle paramétrique et sur la relation paramétrique linéaire,

. au cours du pilotage :

    - on calcule à chaque instant

$$Y_{pk}^* = E(q^{-1}).Y_k$$

$$Y_{k-1}^* = A'(q^{-1}).Y_k$$

$$\beta_{ck}^* = N'(q^{-1}).\beta_{ck}$$

- on préfiltre chacune de ces grandeurs par un polynôme d'ordre au moins égal à 1 ,
- on identifie à partir de ces valeurs préfiltrées (indice F) qui satisfont

$$Y_{pFk}^* = Y_{Fk-1}^*.A_6 + \beta_{cFk-1}^*.K_1 + e_k$$

les coefficients de l'équation de RICCATI et on estime le (ou les) paramètre(s) mal connu(s) que l'on transmet ensuite au calculateur,
- on déduit de la table d'interpolation une pulsation d'excitation $\omega_1$ et une amplitude d'excitation $\varepsilon_1$ pour cette valeur estimée du paramètre,
- on ajoute au signal de commande du calculateur la composante harmonique de pulsation $\omega_1$ et d'amplitude $\varepsilon_1$, et on applique cette somme de signaux à l'actionneur.

Selon des dispositions préférées :
- le paramètre mal connu est la raideur $A_6$,
- avant le pilotage, on construit cette table d'interpolation en sorte de lui faire associer à diverses valeurs possibles au moins ce paramètre, les amplitudes et les pulsations de deux composantes harmoniques de fréquences différentes, et en ce que, au cours du pilotage, on détermine par interpolation, à partir d'au moins la valeur estimée de ce paramètre, des amplitudes $\varepsilon_1$ et $\varepsilon_2$ et des pulsations $\omega_1$ et $\omega_2$, et on ajoute au signal de commande du calculateur des composantes harmoniques de pulsations $\omega_1$ et $\omega_2$ et d'amplitudes $\varepsilon_1$ et $\varepsilon_2$,
- la table d'interpolation admet également l'autre paramètre comme grandeur d'entrée,
- on estime également cet autre paramètre,
- on contrôle que l'amplitude du signal de commande incorporant cette (ou ces) composante(s) harmonique(s) est inférieure à un seuil prédéterminé, et, si oui, on applique ces composantes harmoniques à l'actionneur ou, si non, on réduit l'amplitude de cette (ou ces) composante(s) harmonique(s) en sorte de rester en deçà dudit seuil,
- on contrôle que l'amplitude du signal de commande incorporant cette (ou ces) composante(s) harmonique(s) présente, par rapport à celle du pas d'avant, une différence inférieure à un seuil prédéterminé et, si oui, on applique ces composantes harmoniques à l'actionneur ou, si non, on réduit l'amplitude de cette (ou ces) composante(s) harmonique(s) en sorte de rester en deça dudit seuil.
- le modèle de variation du (ou des) paramètre(s) est du premier ordre,
- le modèle de variation du (ou des) paramètre(s) est du second ordre, le vecteur paramétrique incorporant la dérivée par rapport au temps de chaque paramètre à estimer,
- on préfiltre chacune des grandeurs $Y_{pk}^*$, $Y_{k-1}^*$ et $\beta_{ck-1}^*$ par une forme approchée du rapport des polynômes $D(q^{-1})/C(q^{-1})$ dont on détermine à chaque pas la valeur des coefficients en fonction du (ou des) paramètre(s) estimés(s),
- le système à piloter est un engin aérodynamique à chaîne de pilotage incorporée,
- les signaux de commande sont appliqués à des gouvernes,
- les signaux de commande sont appliqués au vérin d'orientation d'une tuyère de poussée.

Des objets, caractéristiques et avantages de l'invention ressortent de la description qui suit, donnée à titre d'exemple non limitatif, en regard des dessins annexés sur lesquels :
- la figure 1 est une vue schématique d'un engin aérodynamique équipé d'un actionneur commandé, conformément à l'invention, par une chaîne de commande autoadaptative ;
- la figure 2 est un schéma synoptique de cette chaîne de commande comportant un module d'excitation conforme à l'invention ;

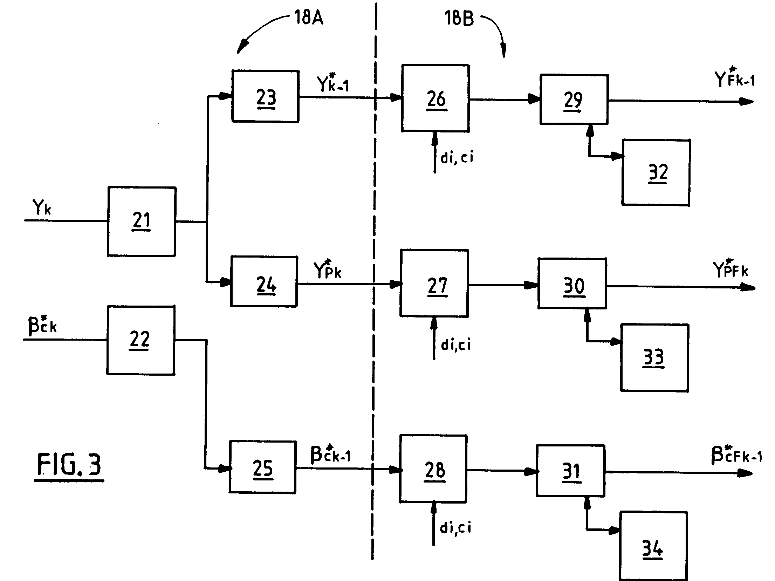

- la figure 3 est un schéma du module de filtrage que comporte le module d'excitation de la figure 2 ;

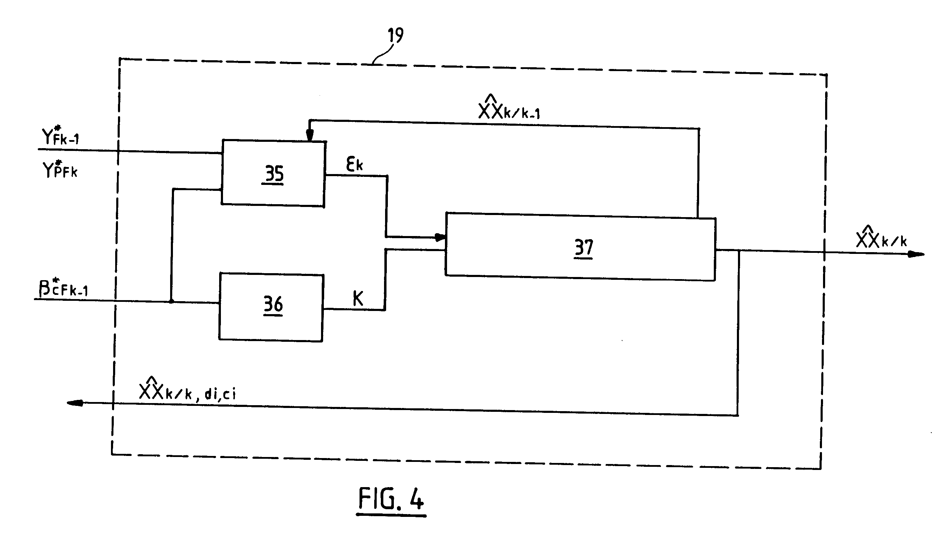

- la figure 4 est un schéma de l'estimateur paramétrique que comporte le module d'excitation de la figure 2 ;
- la figure 5 est un abaque donnant, pour plusieurs valeurs possibles de la raideur, le module en décibel de la "pseudo-mesure" $Y_{pFk}^*$ en fonction de la fréquence d'un extra-signal périodique ;
- la figure 6 est un abaque donnant, pour plusieurs valeurs possibles de la raideur, le gain entre l'extra-signal de fréquence $F_1$ et le terme appliqué à $A_6$ c'est-à-dire $Y_{Fk-1}^*$ dans la relation donnant cette pseudo-mesure sous forme d'une combinaison linéaire de $A_6$ et $K_1$ ;
- la figure 7 est un abaque similaire à celui de la figure 6, donnant le gain entre l'extra-signal de fréquence $F_2$ et le terme appliqué à $K_1$, c'est-à-dire $\beta_{cFk1}^*$.
- les figures 8 à 10 sont des abaques corrélant, pour trois valeurs arbitrairement fixées de la fréquence du premier terme sinusoïdal de l'extra-signal, le coefficient optimal de couplage $\rho_{OP}$ à la fréquence du second terme de cet extra-signal ;

- les figures 11 et 12 sont des abaques donnant respectivement les amplitudes $\varepsilon_1$ et $\varepsilon_2$ associées aux deux fréquences de l'extra-signal, en fonction de $F_2$, pour une valeur de $F_1$ et pour des valeurs données des dérivés des paramètres et des covariances de synthèse ; et

- la figure 13 est un abaque corrélant, dans les mêmes conditions que pour les figures 11 et 12, les traînages sur $A_6$ et $K_1$ en fonction de $F_2$.

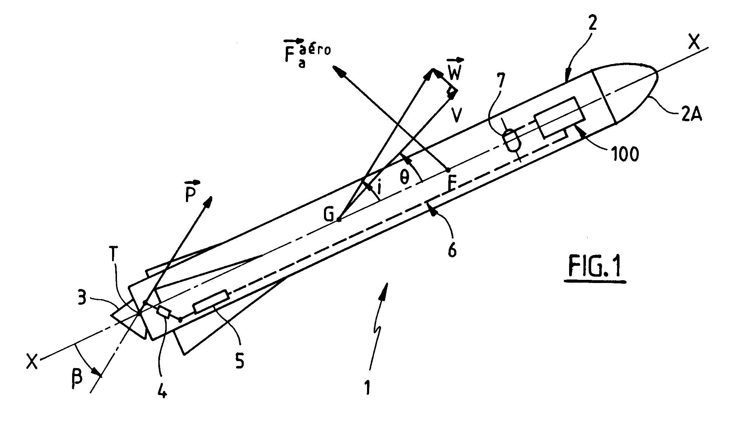

La figure 1 représente un engin 1 à pilotage automatique admettant un axe longitudinal X-X. Cet engin 1 comporte un corps allongé 2 portant une charge utile 2A ainsi qu'au moins un propulseur (non représenté) terminé par une tuyère 3.

Dans la suite, on se limitera à l'analyse du comportement de l'engin dans le plan de la figure 1 que l'on supposera être vertical : on s'intéresse donc ici au comportement en tangage de l'engin (cas classique) que l'on veut asservir à une loi de consigne (trajectoire) pré-programmée. Les explications qui vont suivre peuvent également s'extrapoler à chacun des autres degrés de liberté de l'engin.

Cet engin 1 comporte un organe d'orientation en braquage, ici constitué par la tuyère 3 qui est, à cet effet, montée pivotante autour d'un point T dans le plan de la figure 1.

En variante non représentée, cet organe d'orientation en braquage est constitué par une gouverne orientable tandis que la tuyère, soit conserve une orientation fixe dans le plan, soit est supprimée (engin non propulsé) : l'organe d'orientation est alors indépendant de toute notion de propulsion.

Cet organe d'orientation 3 est placé sous le contrôle d'un actionneur 4 alimenté par un organe de puissance 5 recevant des signaux de commande d'une chaîne de commande autoadaptative 6 comportant une unité de traitement 100 contenant notamment un calculateur de guidage embarqué et recevant des signaux de mesure (ici en tangage) en provenance d'un dispositif de mesure 7 (par exemple une centrale inertielle comportant un gyroscope).

Soit $\theta$ l'angle de la vitesse instantanée $\vec{V}$ du centre de gravité G de l'engin avec l'axe X-X, et $\beta$ l'angle de braquage de la tuyère 3, c'est-à-dire l'angle de la force de poussée $\vec{P}$, appliquée au centre de poussée T, avec l'axe X-X. $\vec{F}_{aero}$ est la force instantanée d'origine aérodynamique, appliquée en un point F, et $\vec{W}$ représente le vent normal, perpendiculaire à la vitesse $\vec{V}$ ; $\underline{i}$ est l'angle d'incidence de la somme

$$\vec{W} + \vec{V}$$

par rapport à l'axe X-X. Les abcisses des points G, T et F sur l'axe X-X, sont notées $X_G$, $X_T$, et $X_F$.

Le dispositif de mesure 7 est adapté à échantillonner $\theta$, et la chaîne de commande adaptative 6 en déduit, d'après la loi de consigne préprogrammée, des ordres de braquage $\beta_c$ à appliquer (processus discret).

Le comportement en tangage de cet engin peut être décrit par une loi d'asservissement ayant la forme d'une équation différentielle linéaire du second ordre :

$$\ddot{\theta} = A_6.\theta + K_1.\beta - A_6.W/V$$

où $A_6$ caractérise la raideur aérodynamique et $K_1$ caractérise l'efficacité de la commande.

Le but de l'invention est de connaître au mieux certains paramètres physiques de l'engin jugés cruciaux pour la stabilité de l'asservissement en tangage (attitude).

Les paramètres supposés mal connus et jugés indispensables à identifier sont, dans cet exemple de la figure 1 :

a. La raideur aérodynamique $A_6$

Ce paramètre est mal connu en général car il est directement relié aux paramètres aérodynamiques qui sont fort mal modélisés. Les coordonnées du foyer $X_F$ sont en particulier entachées d'erreurs à un point tel que l'on peut ignorer le signe réel du bras de levier $X_G - X_F$ : on ignore alors si le système réel est stable ou instable en boucle ouverte.

b. L'efficacité de commande $K_1$

Dans le cas considéré où le système est piloté au moyen d'une tuyère 3, ce paramètre ne dépend pas de l'aérodynamique et est connu avec une précision acceptable. Par contre, si le système est piloté au moyen de gouvernes fixées sur des empennages (cas non représenté mentionné ci-dessus), l'efficacité équivalente linéarisée des gouvernes est fort mal connue et dépend, par exemple, de l'incidence (il peut y avoir un effet de masquage : on doit distinguer l'efficacité des empennages intrados et des empennages extrados).

Dans un souci de crédibilité (preuve de la stabilité globale) on souhaite selon l'invention identifier ces pa- ramétres avec une erreur connue à l'avance, prouvant ainsi la convergence de l'algorithme d'identification. Il est alors possible de synthétiser, avec l'aide des paramètres ainsi périodiquement identifiés, une loi de commande qui assure la stabilité du système.

Or, à notre connaissance, aucun moyen algorithmique d'identification n'a encore été proposé dont on puisse prouver la convergence et qui puisse permettre une prédiction hors ligne de l'erreur d'identification. C'est ainsi qu'aucune preuve de convergence globale n'a été établie pour des systèmes instables en boucle ouverte, pas plus que pour d'éventuelles commandes adaptatives fonctionnant sur des systèmes lentement variables qui auraient pu être proposées, stables en boucle ouverte, et nécessitant une intervention humaine dans les cas de divergence possible (fours, laminoirs...).

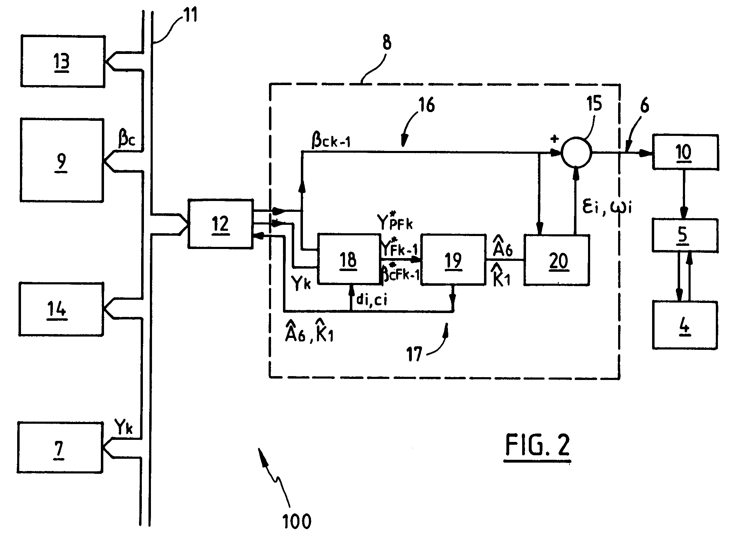

L'invention réside dans la mise en oeuvre, au sein de l'unité de traitement, d'un module d'excitation 8 qui se place (voir figure 2) entre le calculateur de guidage 9 de l'engin et l'étage de puissance 5 de l'actionneur 4 de l'engin.

De manière très générale, à partir des mesures de $\theta$ et de l'ordre de braquage numérique (on travaille en fait en régime discret) déterminé par le calculateur de guidage 9, le module d'excitation de vérin élabore un ordre supplémentaire numérique d'excitation qui a pour objectif d'enrichir dans une bande de fréquence très précise, de façon judicieuse (théoriquement optimale) ledit ordre numérique provenant du guidage. A cet effet le module d'excitation 8 saisit les mesures de $\theta$, en pratique entachées d'erreur notées Y, produites par la centrale inertielle (mesures d'attitude, de roulis ...) ainsi que les ordres de braquage $\beta_c$ du calculateur de guidage et estime des valeurs de synthèse des paramètres de l'engin ($A_6$, $K_1$ principalement) avec une précision connue à l'avance. Le module transmet alors ces valeurs estimées des paramètres au calculateur de guidage qui en fonction de ces nouvelles données importantes, ajuste ses ordres ultérieurs de guidage et de braquage dans le sens d'une meilleure précision de guidage et d'un meilleur contrôle (optimal). Le module élabore enfin, par addition à $\beta_c$ des éventuels extra-signaux, les valeurs successives des ordres effectifs de braquage.

Ce processus se répète à chaque pas de discrétisation.

En fait le calculateur 9, qui asservit l'actionneur en sorte de faire suivre à l'engin 1 une trajectoire prédéterminée constitue une unité de guidage/pilotage.

L'organe de puissance 5 de l'actionneur 4 est ici supposé être à commande analogique et le signal de sortie du module d'excitation 8 lui est appliqué au travers d'un convertisseur numérique/analogique 10. Si cet organe 5 était à commande numérique, ce convertisseur 10 serait à supprimer.

Le module d'excitation 8 est relié au dispositif de mesure 7 et à l'unité de pilotage 9 par un bus bidirectionnel 11 au travers d'un coupleur 12. De manière classique sur ce bus sont également connectés, notamment, une unité de gestion de bus 13 destinée à gérer la circulation des informations qui transitent par ce bus, ainsi qu'un séquenceur 14 qui définit le chronogramme des étapes du guidage/pilotage effectué par l'unité 9 (éventuelle succession des lois de consigne et/ou d'asservissement).

Ce module d'excitation 8 comporte un élément de sommation 15 auquel parviennent une ligne de commande 16 provenant directement du coupleur 12 et une ligne d'excitation 17 le long de laquelle sont élaborés les signaux d'excitation. Ce sommateur est relié au convertisseur 10 par la ligne de commande 6.

La ligne d'excitation 17 comporte trois unités en série, à savoir un module de filtrage 18, un module d'estimation paramétrique 19 et un module de génération de signaux d'excitation 20.

La chaîne d'asservissement reliant le dispositif de mesure 7 à l'actuateur 4, via le calculateur 9 et le module d'excitation 8, est numérique, et son fonctionnement est discret (avec une période d'échantillonnage T, par exemple égale à 40 ms, ce qui correspond à une fréquence d'échantillonnage de 25 Hz), avec prise en compte des valeurs précédemment échantillonnées des grandeurs précitées :

- $Y_k$, $Y_{k-1}$, $Y_{k-2}$ ... pour les mesures de l'angle de tangage $\theta$,
- $\beta_{ck-1}$, $\beta_{ck-2}$ ... pour les ordres de braquage élaborés par le calculateur 9.

En fait, compte tenu de ce caractère discret, toutes les grandeurs définies ci-dessus (ainsi que des grandeurs qui seront introduites ci-dessous) seront dans la suite affectées d'un indice k-i (i entier) tel que k-2, ...., k-1, k ou k+1, correspondant à des instants différents, l'instant k correspondant à l'instant présent.

On appréciera que $Y_k$ correspond à la réaction du système à $\beta_{ck-1}$.

Avant de poursuivre la description de la chaîne de calcul 17 il paraît nécessaire de définir plus précisément le principe de cette chaîne de calcul ainsi que les grandeurs qui sont, préalablement à la mise en service de cette chaîne de calcul, calculées hors ligne puis stockées dans les mémoires de l'unité de traitement 100.

On procède ainsi au sol à diverses caractéristisations physiques. C'est ainsi qu'on peut tenter de modéliser la principale perturbation mentionnée ci-dessus, à savoir le vent : on suppose que sa moyenne $\overline{W}$ est nulle et on évalue la valeur de son écart-type $\sigma W$, par exemple par des sondages atmosphériques. D'autre part, on assimile le vent à un processus aléatoire $W_R$ de variance unité et de constante de temps $-1/\mu$ de sorte que l'on peut écrire :

$$\dot{W}_R = \mu W_R + \varepsilon_w$$

où $\varepsilon_w$ est un bruit blanc.

On a alors :

$$W = \sigma W . W_R$$

On identifie par ailleurs les bornes physiques associées à l'actionneur 4 ($\beta_{max}$, $\beta_{min}$ et $\dot{\beta}_{max}$) ainsi que sa loi de réponse que l'on représente par :

$$\dot{\beta} = -\frac{1}{\tau}(\beta - \beta_C) + \varepsilon_\beta$$

où $\varepsilon_\Phi$ est un bruit blanc de dynamique et où $\tau$ est la constante de temps de l'actionneur.

On choisira dans la suite de négliger les modes de flexion de l'engin (l'invention permet toutefois de les prendre en compte si nécessaire).

On peut alors définir pour l'engin un vecteur d'état X, et une matrice de dynamique A, tous deux du quatrième ordre, ainsi qu'une matrice de commande B appliquée au scalaire de commande $\beta_c$ :

$$X = A.X + B.\beta_c + W'$$

ou, en forme développée :

$$\begin{vmatrix} \ddot{\theta} \\ \dot{\theta} \\ W \\ \beta \end{vmatrix} = \begin{vmatrix} O & A_6 & -\dfrac{a_6\,\sigma_w}{V} & K_1 \\ 1 & O & O & O \\ O & O & \mu & O \\ O & O & O & -1/ \end{vmatrix} . \begin{vmatrix} \dot{\theta} \\ \theta \\ W \\ \beta \end{vmatrix} + \begin{vmatrix} O \\ O \\ 0 \\ \dfrac{1}{\tau} \end{vmatrix} \beta_c + W'$$

où $\beta$ est le braquage réalisé, différent du braquage commandé $\beta_c$.

On peut de même définir une matrice de mesure reliant la grandeur scalaire mesurée Y au vecteur d'état, par une matrice de mesure H : $Y = H.X + V'$ ou

$$Y = [\, 0 \quad 1 \quad 0 \quad 0 \,] . \begin{vmatrix} \dot{\theta} \\ \theta \\ W \\ \beta \end{vmatrix} + V'$$

Ces écritures en régime continu correspondent, en régime discret, aux équations suivantes, en utilisant les indices $\underline{k}$ déjà cités :

$$X_{k+1} = F.X_k + G.\,\beta_{ck} + W_k$$
$$Y_k = H.X_k + v_k$$

où :

$$F = \exp(A.T)$$
$$G = A^{-1}[\exp(AT) - I].B$$

$w_k$ et $v_k$ étant des bruits discrétisés blancs,

T étant la période d'échantillonnage, et A et B étant supposés constants entre deux pas d'échantillonnage.

Il est possible de construire de façon connue en soi, un filtre linéaire de KALMAN pour éliminer les bruits ; on a alors :

$$\hat{X}_{k+1/k} = F.\hat{X}_{k/k} + G.\beta_{ck}$$
$$\hat{X}_{k/k} = \hat{X}_{k/k-1} + K_F(Y_k - H.\hat{X}_{k/k-1})$$

où :

$\hat{X}_{k+1/k}$ est la valeur prédite pour le pas suivant, connaissant $Y_k$,

$\hat{X}_{k/k}$ est la valeur estimée à l'instant k, connaissant $Y_k$,

On notera que l'on n'a pas besoin d'estimer $\beta_{ck}$ : on le suppose bien connu.

Le vecteur $K_F$ indiqué ci-dessus est le vecteur des gains de filtrage optimal (donné par la théorie) c'est-à-dire qu'il est défini ici par :

$$K_F = \frac{P_k.H^T}{R_k + H.P_k.H^T}$$

On peut par ailleurs écrire la loi de commande, faite par retour d'état (loi linéaire quadratique gaussienne), sous la forme :

$$\beta_{ck} = K_c.\hat{X}_{k/k} + \alpha.\eta_k$$

où :

- $K_c$ est le vecteur des gains de commande, par exemple obtenu par itération unique de l'équation de RICCATI discrète à chaque pas d'échantillonnage,
- $\alpha$ un scalaire appelé gain de normalisation, tel que l'on puisse écrire en moyenne $E[Y_k] = \eta_k$
- $\eta_k$ est l'extra-signal d'excitation.

On rappelle que l'équation de RICCATI discrète est de la forme :

$$P_{k+1} = F.P_k.F^T - \frac{F.P_k.H^T.H.P_k.F^T}{R_k + H.P_k.H^T} + Q$$

où

- $P_k$ est la co-variance de l'erreur d'estimation (que l'on cherche à minimiser par le filtrage optimal) dont on sait estimer une valeur initiale $P_o$, avant la mise en oeuvre de l'engin,
- $R_k$ est la variance des bruits de mesure $v_k$ (connue à l'avance, assimilable à une constante),
- $Q$ est la matrice de variance des bruits d'état $\omega_k$.

On peut reconstituer les grandeurs F et Q à chaque pas en fonction des valeurs de $A_6$ et $K_1$ estimées au pas d'avant.

On fait intervenir dans la suite, la transformée en Z des diverses grandeurs (Z étant l'opérateur "avance") et en introduisant la notation $q^{-1} = 1/Z$ (ce qui correspond à un opérateur "retard" qui peut s'écrire $q^{-1} = e^{-jwT}$) ; ainsi par exemple on a :

$$q^{-1}.\hat{X}_{k+1/k} = \hat{X}_{k/k-1}$$

On peut écrire la relation de mesure sous la forme :

$$Y_k = H.\hat{X}_{k/k-1} + e_k$$

En éliminant le terme $X_{k/k-1}$ on montre que l'on peut écrire une équation entrée-sortie sous la forme :

$$A(q^{-1}).Y_k = B(q^{-1}).\beta_{ck} + C(q^{-1}).e_k$$

où

- $A(q^{-1})$ est le polynôme caractéristique de la matrice dynamique du système stochastique discret donné par :

$$A(q^{-1}) = \det(I - q^{-1}.F)$$

- $B(q^{-1})$ est le polynôme de commande du système stochastique donné par :

$$B(q^{-1}) = \det(I - q^{-1}(F - GH)) - \det(I - q^{-1}.F)$$

- $C(q^{-1})$ est le polynôme caractéristique du filtre de KALMAN, donné par :

$$C(q^{-1}) = \det(I - q^{-1}(F - F.K_F.H))$$

où $F.K_F$ est le vecteur de gains optimal du filtre de KALMAN du système réel (gain de prédiction),

- $e_k$ étant l'innovation du filtre de KALMAN.

On peut remarquer que le degré de ces polynômes en $q^{-1}$ est égal à l'ordre du système, c'est-à-dire la dimension du vecteur d'état considéré.

Pour obtenir une relation faisant intervenir un moindre degré on peut utiliser le fait que l'on démontre que les polynômes $A(q^{-1})$ et $B(q^{-1})$ sont divisibles par le polynôme des modes non commandables (à savoir le vent dans le cas considéré) que l'on note $D(q^{-1})$ et qui est de la forme :

$$D(q^{-1}) = 1 + d_1.q^{-1} + d_2 q^{-2} ...$$

Dans le cas présent, compte tenu de la modélisation précitée du vent :

$$D(q^{-1}) = 1 + d_1 q^{-1} \text{ avec } d_1 = -e\mu^T$$

On peut ainsi écrire :

$$A_R(q^{-1}).Y_k = B_R(q^{-1}).\beta_{ck} + \frac{C(q^{-1})}{D(q^{-1})}.e_k$$

où $A(q^{-1}) = A_R(q^{-1}).D(q^{-1})$ et $B(q^{-1}) = B_R(q^{-1}).D(q^{-1})$

On démontre en outre que, en appelant $A_c(q^{-1})$ le polynôme de transfert des actionneurs (ici le vérin 4) on peut écrire :

$$A_R(q^{-1}) = A_c(q^{-1}).A_{BO}(q^{-1})$$

où $A_{BO}(q^{-1})$ est ainsi le polynôme caractéristique du système dépouillé de sa chaîne de commande.

Compte tenu de la modélisation indiquée ci-dessus du vérin on a :

$$A_c(q^{-1}) = 1 - e^{-T/\tau}.q^{-1}$$

On peut démontrer qu'un développement limité au premier degré de $A_{BO}(q^{-1})$ en supposant $A_6.T^2$ négligeable devant 1 s'écrit :

$$A_{BO}(q^{-1}) = (1 - q^{-1})^2 - T^2.q^{-1}.A_6$$

8

On peut démontrer enfin que, dans le domaine aéronautique, on peut écrire :

$$B_R(q^{-1}) = K_1.N'(q^{-1}) \text{ d'où on tire } N'(q^1).$$

On peut donc écrire :

$$A_c(q^{-1}).(1 - q^{-1})^2.Y_k = T^2 q^{-1}.A_c(q^{-1}).Y_k.A_6 + N'(q^{-1})).\beta_{ck}.K_1 + \frac{C(q^{-1})}{D(q^{-1})} . e_k$$

ce qui peut s'écrire, en considérant que le premier terme est une "pseudo-valeur" de mesure noté $Y_{pk}^* = E(q^{-1}).Y_k$ :

$$Y_{pk}^* = Y_{1k}.A_6 + Y_{2k}.K_1 + \frac{C(q^{-1})}{D(q^{-1})} .e_k$$

où $C(q^{-1})$ dépend principalement de $A_6$ et où $Y_{1k}$ et $Y_{2k}$ sont deux pseudo-valeurs obtenues à partir de $Y_k$, et de $\beta_{ck}$.

On sait calculer le polynôme $N'(q^{-1})$ : il s'écrit sous la forme :

$$N'(q^{-1}) = ( b'_0 + b'_1.q^{-1} + b'_2.q^{-2} ) .q^{-1}$$

où :

$$b'_0 = \frac{1}{A_6(A_6.\tau^2 - 1)} (1 + B - A - 2 ch(\sqrt{A_6}.T) + e^{-T/.\tau})$$

$$b'_1 = \frac{1}{A_6(A_6.\tau^2 - 1)} (1 - B + 2A ch(\sqrt{A_6}.T) - (1 + B)e^{-T/\tau})$$

$$b'_2 = \frac{1}{A_6(A_6.\tau^2 - 1)} (Be^{-T/\tau} - A)$$

en notant :

$$A = (1 - A_6.\tau_2)e^{-T/\tau} + A_6.\tau^2$$
$$B = ch (\sqrt{A_6}.T) + \sqrt{A_6}.\tau sh (\sqrt{A_6}.T)$$

sous l'hypothèse $A_6.\tau^2 << 1$.

On note $e_1$ les coefficients du polynôme appliqué à $Y_k$ pour donner $Y_k^*$, et $a'_1$ les coefficients du polynôme A' appliqué à $Y_k$ dans $Y_{1k}$. Ces polynômes, ainsi que $N'(q^{-1})/q^{-1}$ sont de degré 2 .

On a donc :

$$E(q^{-1}).Y_k = A'(q^{-1}).Y_k.A_6 + N'(q^{-1}).\beta_{ck}.K_1 + \frac{C(q^{-1})}{D(q^{-1})} . e_k$$

Si l'on s'intéresse maintenant aux fonctions de transfert discrètes entre l'extra signal $\eta_k$ et les signaux de commande $\beta_{ck}$, et les signaux de sorties mesurées $Y_k$, est en supposant le système quasi-stationnaire (les paramètres réels $A_6$ et $K_1$ restent constants pendant le temps de réponse du système en boucle ouverte), et si l'on note :

$$e_{Mk} = Y_k - H.\hat{X}_{k/k-1}$$

on peut écrire :

$$Y_k = R (q^{-1}).e_{Mk} + \frac{B(q^{-1})}{B_F(q^{-1})} . \alpha . \eta_k$$

$$\beta_{ck} = S(q^{-1}).e_{MK} + \frac{A(q^{-1})}{B_F(q^{-1})} .\alpha . \eta_k$$

avec :

$$R(q^{-1}) = \frac{det(1 - q^{-1} (F + G.K_c) (I - K_F.H))}{det(1 - q^{-1} (F + G.K_c))}$$

$$S(q^{-1}) = \frac{det(I - q^{-1} (F + G.K_c - K_F.K_c)) - det(I - q^{-1} (F + G.K_c))}{det(I - q^{-1} (F + G.K_c))}$$

$$B_F(q^{-1}) = det (I - q^{-1} (F + G.K_c))$$

On obtient ainsi :

$$Y_k^* = T^2.q^{-1}.A_c(q^{-1}). \frac{B(q^{-1})}{B_F(q^{-1})} . \alpha . \eta_k.A_6 + q^{-1} N'(q^{-1}) . \frac{A(q^{-1})}{FB(q^{-1})} . \alpha . \eta_k.K_1 + \frac{C(q^{-1})}{D(q^{-1})} . e_k +$$

$$[T^2.q^{-1}.A_c(q^{-1}).R(q^{-1}).A_6 + q^{-1} N'(q^{-1}).S(q^{-1}).K_1] . e_{Mk}$$

On a deux bruits mais le terme $e_{Mk}$ ne fausse les calculs que si la désadaptation entre le modèle et le système est importante : on supposera que cela n'est pas le cas et que le terme de $e_{Mk}$ est négligeable devant les extra-signaux.

Pour blanchir le bruit $e_k$ il suffit de multiplier l'ensemble par $(D(q^{-1})/C(q^{-1}))$.

A titre de solution approchée (on ne connaît pas la valeur réelle de $C(q^{-1})$) on choisit d'établir à l'avance une table d'interpolation en fonction des valeurs possibles pour les paramètres ; on a ainsi une valeur estimée $\hat{C}(q^{-1})$. On sait de même obtenir, par une interpolation similaire une valeur de $\hat{D}(q^{-1})$. Soient $c_1$ et $d_1$ les coefficients de ces polynômes.

En multipliant par $\hat{D}(q^{-1})/\hat{C}(q^{-1})$ en choisissant par exemple :

$$\hat{C}(q^{-1}) = \det(I - q^{-1}(F - F.K_F.H))$$

on effectue un préfiltrage (lettre F en indice), d'où :

$$\varphi^*_{F1k} = T^2.q^{-1}.A_c(q^{-1}) \frac{\hat{D}(q^{-1})}{\hat{C}(q^{-1})} \cdot \frac{B(q^{-1})}{B_F(q^{-1})} \cdot \alpha \cdot A_6$$

$$\varphi^*_{F^2k} = : q^{-1}.N'(q^{-1}). \frac{\hat{D}(q^{-1})}{\hat{C}(q^{-1})} \cdot \frac{A(q^{-1})}{B_F(q^{-1})} \cdot \alpha.K_1$$

$$\text{avec } \varphi_{F1k} = \frac{Y_{F1k}}{\eta_k} = \frac{Y_{1k}}{\eta_k} \cdot \frac{\hat{D}(q^{-1})}{\hat{C}(q^{-1})} \text{ et } \varphi_{F2k} = \frac{Y_{F2k}}{\eta_k} = \frac{Y_{2k}}{\eta_k} \cdot \frac{\hat{D}(q_1)}{\hat{C}(q^{-1})}$$

et la pseudo-mesure $Y^*_k$ s'écrit après préfiltrage :

$$Y_{Fk} = AC(q^{-1}).(1 - q^{-1})^2. \frac{D(q^{-1})}{C(q^{-1})} \cdot Y_k$$

d'où :

$$Y_{Fk} = Y_{F1k}.A_6 + Y_{F2k}.K_1 + e_k$$

On sait établir également un terme pour le terme de flexion de l'engin, mais on a choisi (voir ci-dessus) de ne pas en tenir compte pour ne pas alourdir l'exposé.

Une telle expression sert de base à l'établissement de tables de correspondance pour l'élaboration des extra-signaux optimaux, à partir de l'estimation à chaque pas de $A_6$ et $K_1$, à partir de la détermination à l'avance des plages de valeurs possibles pour ces paramètres ainsi que pour l'amplitude et la pulsation des extra-signaux.

Cette estimation à chaque pas de $A_6$ et $K_1$ se fait par filtrage en écrivant la relation précédente :

$$Y^*_{Fk} = HH.XX_k + e_k$$

où

$$XX_k = [\, A_6, \dot{A}_6, K_1, \dot{K}_1 \,]^T$$

et où

$$HH = [\, Y_{F1k}, O, Y_{F2k}, O \,]$$

et en choisissant au préalable la forme d'un modèle représentant les variations de $A_6$ et $K_1$ au cours du temps :

$$XX_{k+1} = FF.XX_k + w_k$$

la matrice FF est la matrice de dynamique discrète correspondant au modèle choisi pour les paramètres.

Un modèle du premier ordre pourrait s'écrire :

$$\dot{XX} = \varepsilon$$ où $\varepsilon$ est un bruit blanc et XX se réduit alors à $|A_6 \, K_1|^T$ ce qui représente bien des phénomènes lentement variables ($XX_k$ et HH sont alors d'ordre 2), un modèle du second ordre (c'est le cas envisagé ici) peut s'écrire :

$$\dot{XX} = \mu_{P.XX} + \varepsilon$$

où $\mu_P$ est une matrice de dynamique comprenant des termes de frottement visqueux ; ce modèle amplifie les basses fréquences et affaiblit les hautes fréquences.

Si $Q_D$ est la covariance discrète du bruit blanc vectoriel $w_k$ et $R/(1-K_y)$ la covariance du processus d'innovation $e_k$ on a pour l'équation de RICCATI la forme :

$$PP_{k+1/k} = FF. [PP_{k/k-1} - \frac{PP_{k/k-1}.HH^T.HH.PP_{k/k-1}}{1 + HH.PP_{k/k-1}.HH^T}] FF^T + \frac{Q_D}{\frac{R}{1-K_y}}$$

où $k_y$ est le gain relatif à l'état mesuré (il vaut $H.K_F$)

Les paramètres estimés sont alors donnés par :

$$\hat{XX}_{k+1} = FF.\hat{XX}_k + K(Y_k - HH.\hat{XX}_k)$$

$$\text{avec } K = \frac{FF.PP_{k/k-1}.HH^T}{1 + HH.PP_{k/k-1}.HH^T}$$

On connaît une valeur initiale $PP_O$. On peut donc estimer, par itération unique, le vecteur XX.

On peut par ailleurs tracer par avance, pour diverses valeurs des paramètres, des abaques donnant :

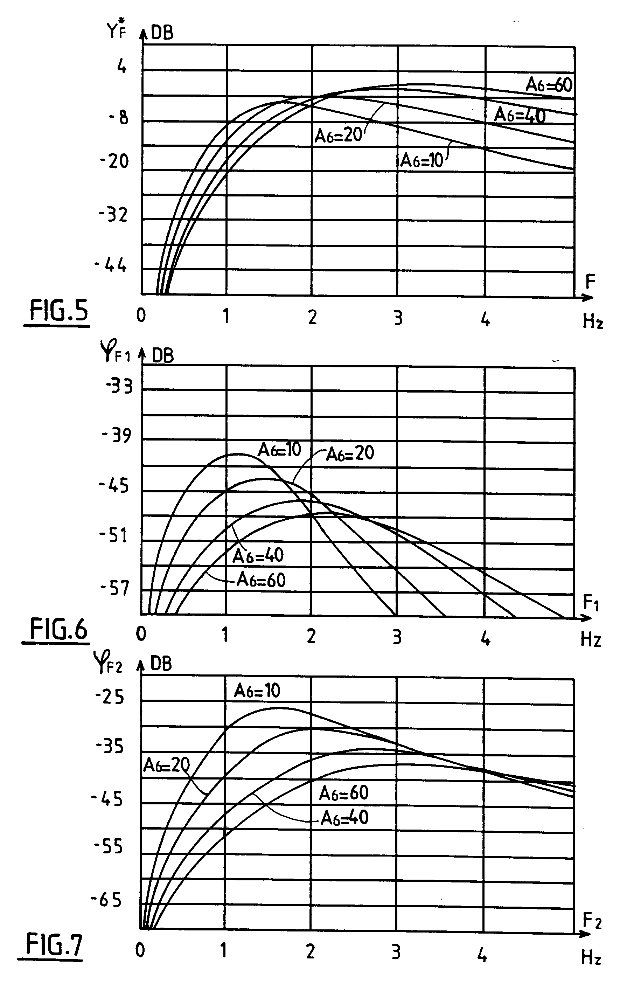

- le module en décibel de la pseudo-mesure $Y^*_{Fk}$, en fonction de la fréquence supposée unique de l'extra signal (voir la figure 5),
- le module en décibel de $\varphi_{F1}$, en fonction de cette fréquence (voir la figure 6),
- le module en décibel de $\varphi_{F2}$ en fonction de cette fréquence (voir la figure 7).

En d'autres termes, ces figures 6 et 7 représentent les gains entre l'extra-signal et les grandeurs $Y_{F1}$ et

$Y_{F2}$.

Si l'on ne souhaite estimer que $A_6$, en supposant $K_1$ suffisamment bien connu, on ne présente qu'une seule pulsation d'extra-signal. L'élément $\varphi_{F1}$ a alors l'amplitude donnée par la seule figure 6 et l'équation de RICCATI est scalaire, non linéaire et non stationnaire :

$$\frac{dp(t)}{dt} = q^2 - a^2{}_z i_n^2 \omega t . p^2(t)$$

On montre que l'on peut approximer $p(t)$ par $\sqrt{2}.q/a$ si

$$q^2 \frac{\pi}{w} >> \sqrt{2} \frac{q}{a}$$

on montre en outre que le trainage asymptotique de $A_6$ est donné par :

$$tr(A_6) = - \frac{\sqrt{2} \mathring{A}_6}{q.a}$$

Puisque l'extra-signal $\eta_k$ est ici choisi sous la forme d'une somme de deux termes de pulsations $w_1$ et $w_2$, on peut écrire les relations :

$$Y_{F1} = a_1.\sin w_1.t + b_1.\sin w_2.t$$
$$Y_{F2} = a_2.\sin w_1.t + b_2.\sin w_2.t$$

et l'équation de RICCATI associée est matricielle, non linéaire et non stationnaire :

$$\dot{P}(t) = Q - P(t).H^T(t).H(t).P(t)$$

avec

$$H^T(t).H(t) = \begin{vmatrix} (Y_{F1})^2 & 0 & Y_{F1}.Y_{F2} & 0 \\ 0 & 0 & 0 & 0 \\ Y_{F1}.Y_{F2} & 0 & (Y_{F2})^2 & 0 \\ 0 & 0 & 0 & 0 \end{vmatrix}$$

et

$$Q = \begin{vmatrix} 0 & 0 & 0 & 0 \\ 0 & q_1^2 & 0 & 0 \\ 0 & 0 & 0 & 0 \\ 0 & 0 & 0 & q_2^2 \end{vmatrix}$$

On montre qu'une approximation précise du comportement est obtenue en remplaçant dans l'équation de RICCATI la matrice non stationnaire périodique (harmonique) $H^T(t).H(t)$ par sa matrice efficace, laquelle peut s'écrire :

$$(H^T.H)_{eff} = \begin{vmatrix} c^2 & 0 & \rho cd & 0 \\ 0 & 0 & 0 & 0 \\ \rho cd & 0 & d^2 & 0 \\ 0 & 0 & 0 & 0 \end{vmatrix}$$

en posant :

$$c = \frac{1}{\sqrt{2}} \sqrt{a^2{}_1 + b_1^2}$$

$$d = \frac{1}{\sqrt{2}} \sqrt{a_2^2 + b_2^2}$$

$$P = \frac{a_1.a_2 + b_1.b_2}{\sqrt{(a_1^2 + b_1^2)(a_2^2 + B_2^2)}}$$

Les éléments $Y_{F1}$ et $Y_{F2}$ sont structurellement en phase.

Le paramètre $\rho$ est le cosinus de l'angle $\varphi_o$ des vecteurs $(a_1, b_1)$ et $(a_2, b_2)$. Plus ce cosinus est faible, mieux

les paramètres $A_6$ et $K_1$ sont identifiables séparément ; on l'appelle coefficient de couplage.

Ce cosinus dépend des niveaux respectifs des deux sinusoïdes sur les éléments $Y_{F1}$ et $Y_{F2}$ et on peut déterminer hors ligne sa valeur après avoir lu les niveaux $a_1$, $a_2$, $b_1$, $b_2$ sur les abaques des figures 6 et 7 en fonction des pulsations $\omega_1$ et $\omega_2$ et des amplitudes $\varepsilon_1$ et $\varepsilon_2$.

La tangente correspondant à ce cosinus s'écrit :

$$\text{tg } \varphi_0 = \frac{|a_1.b_2 - a_2.b_1|}{a_1.a_2 + b_1.b_2}$$

On commence par choisir la première pulsation $w_1$ aux alentours de la pulsation de résonance de $Y_{F1}$ (voir la figure 6), ce qui fixe le rapport $a_1/a_2$. On démontre que l'optimum pour $\cos Y_0$ est le cas où :

$$\frac{a_2}{b_2} = \sqrt{\frac{b_1\, a_2}{b_2\, a_1}} \text{ noté } T_{OP} = \sqrt{Z/Y}$$

si $Z = b_1/b_2$ et $Y = a_1/a_2$, la valeur optimale de P est alors donnée par :

$$\rho_{OP} = \frac{2\, T_{OP}}{1 + T_{OP}^2}$$

qui ne dépend plus que des pulsations $\omega_1$ et $\omega_2$ et non plus des niveaux $\varepsilon_1$ et $\varepsilon_2$. En fixant cette valeur, on fixe donc la grandeur $T_{OP}$ et plus précisément le choix de $\omega_2$ connaissant $\omega_1$ à $\rho_{OP}$ désiré.

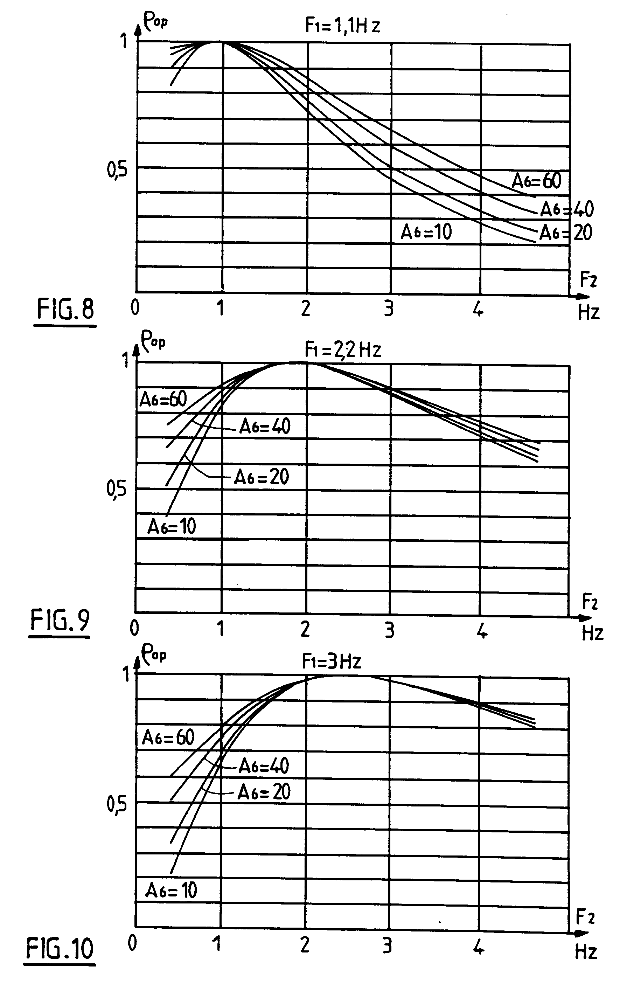

Les figures 8 à 10 sont des abaques corrélant pour diverses valeurs possibles de la fréquence $F_1$ associée à $\omega_1$, le coefficient optimum $\rho_{OP}$ à la fréquence $F_2$ associée à $\omega_2$. Ces abaques peuvent être établis hors ligne, et leur nombre peut être augmenté à volonté en choisissant d'autres valeurs de $F_1$.

Si l'on appelle E l'énergie induite sur la sortie du système par les extra-signaux, on déduit les amplitudes $\varepsilon_1$ et $\varepsilon_2$ des termes sinusoîdaux de ces extra-signaux par :

$$\varepsilon_1 = T_{OP} \cdot \sqrt{\frac{2E}{\alpha_1^2 . T_{OP}^2 + \alpha_2^2 . (g_1^2/g_1^2)}}$$

$$\varepsilon_2 = \sqrt{\frac{2E}{\alpha_1^2(g_2^2/g_1^2).T_{OP}^2 + \alpha_2^2}}$$

où $g_1$ et $g_2$ sont les gains entre $a_2$ et $\varepsilon_1$, et $b_2$ et $\varepsilon_2$ et où $\alpha_1$ et $\alpha_2$ sont les gains entre la sortie du système $Y_k$ et $\varepsilon_1$ ou $\varepsilon_2$.

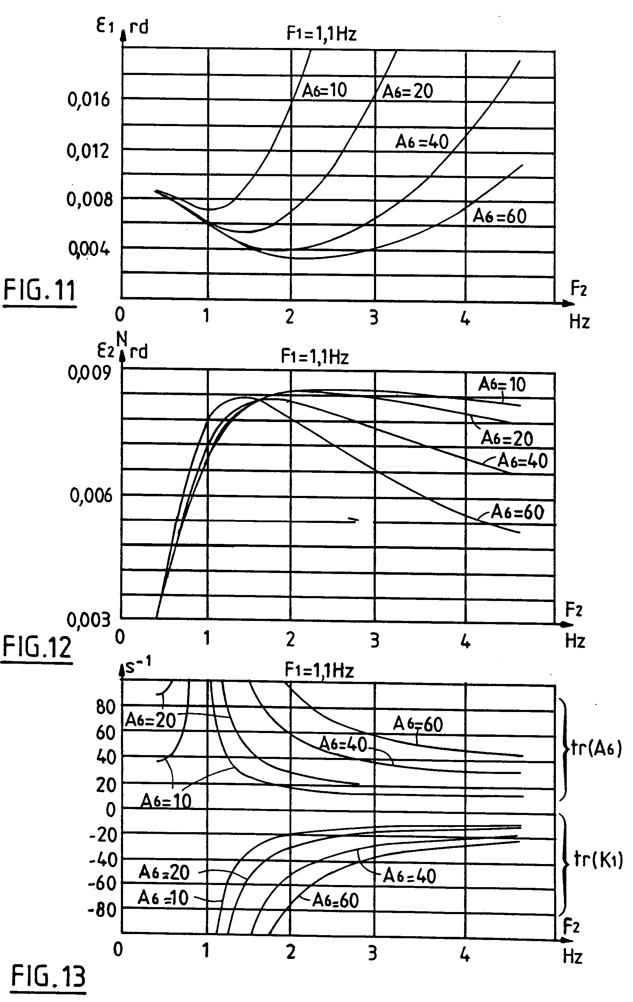

Les figures 11 et 12 sont des abaques corrélant respectivement les amplitudes $\varepsilon_1$ et $\varepsilon_2$ à la fréquence $F_2$ pour une valeur donnée de $F_1$ et une valeur de $E = 6.10^{-3}$. Les erreurs de traînage sont ensuite données par la formule suivante, avec les valeurs $\mathring{A}_6 = -15$ et $\dot{K}_1 = -25$ et pour des valeurs de covariance de synthèse $q_1^2 = q_2^2 = 15$ :

$$\text{tr} \begin{pmatrix} A_6 \\ K_1 \end{pmatrix} = - [ P_{moy}.(H^T.H)_{eff} ]^{-1} \begin{bmatrix} \mathring{A}_6 \\ \dot{K}_1 \end{bmatrix}$$

avec $P_{moy}$ étant la matrice de RICCATI en régime permanent.

On démontre que pour un modèle paramétrique du premier ordre :

$$\text{tr}(A_6) = \frac{1 + \dfrac{q_2.d}{q_1.c} \cdot \sqrt{\dfrac{1}{1 - \rho^2}}\,\mathring{A}_6 - \dfrac{q_1}{q^2}\dfrac{\rho}{\sqrt{1 - \rho^2}} \cdot \dot{K}_1}{- \sqrt{q_1^2 . c^2 + q_2^2.d^2 + 2\, q_1.q_2.c.d. \sqrt{1 - \rho^2}}}$$

$$\text{tr}(K_1) = \frac{1 + \dfrac{q_1.c}{q_2.d} \sqrt{\dfrac{1}{1 - \rho^2}} \cdot \dot{K}_1 - \dfrac{q2}{q_1} \cdot \dfrac{\rho}{\sqrt{1 - \rho^2}} \cdot \mathring{A}6}{- \sqrt{q_1^2 . c^2 + q_2^2 . d^2 + 2q_1.q_2.c.d. \sqrt{1 - \rho^2}}}$$

La figure 13 est une abaque donnant, pour les mêmes conditions que les figures 11 et 12, les valeurs de ces traînages en fonction de $F_2$.

Il est à noter que les courbes précitées peuvent être calculées hors ligne.

A titre d'exemple on prend :

. période d'échantillonnage $T = 0,04$ s

. constante servo-gouverne (vérin) : $\tau = 0,02$ s

. écart-type du vent $\sigma w = 20$ m/s

. la constante du vent $\mu = -0,03/s$

. la covariance du bruit de mesure $R = 10^{-7}$ rd$^2$

. le tangage commandé $\theta_r = 0,02$ rd

. la saturation en vitesse $\beta_{max} = 1,7$ rd/s

. la saturation en position $\beta_{max} = 0,15$ rd

. la covariance du bruit de la servo-gouverne $q_\Phi = 10^{-6}$ rd$^2$s$^{-1}$

. l'excitation mode/braquage $k = 52.000$ s$^{-2}$

. la vitesse de l'engin $V = 900$ m/s

Les divers coefficients des polynômes précités, et les tables numériques correspondant aux abaques précités ont été stockées dans la ligne 17 du module d'excitation.

Le module de filtrage 18 est composé de deux étages successifs, notés 18A et 18B.

Le premier étage 18A comporte deux séries de registres à décalage, respectivement notées dans leur ensemble 21 et 22, adaptées à garder en mémoire un nombre (m+1) de valeurs de Y ($Y_{k-m}, ... Y_k$) et un nombre (m+1) de valeurs de $\beta_c$ ($\beta_{ck-m}, ... \beta_{ck-1}$) ; ce nombre m est ici égal à 2.

Cet étage 18A comporte en outre des éléments de sommation 23 à 25 adaptés à élaborer, par combinaisons linéaire, des valeurs mémorisées de Y ou $\beta_c$, des "pseudo-valeurs" repérées par un astérisque en indice :

$$Y_{k-1}^* = a'_1.Y_{k-1} + a'_2 Y_{k-2} ... + a'_m.Y_{k-m}$$

$$\beta_{ck-1}^* = b'_1.\beta_{ck-1} + b'_2\beta_{ck-2} ... + b'_m.Y_{k-m}$$

$$Y_{pk}^* = e_0.Y_k + e_1.Y_{k-1} + ....... + e_m.Y_{k-m}$$

Les coefficients $a'_1, ... a'_m, b'_1 ... b'_m, e_0.... e_m$ ont été explicités ci-dessus. Ils dépendent uniquement de la partie déterministe du modèle de comportement choisi pour l'engin 1, et ont pu être calculés hors ligne.

Le second étage 18B comporte trois séries de registres à décalage, respectivement notées 26 à 28 dans leur ensemble, adaptées à garder en mémoire $\underline{q}$ valeurs passées de $Y_{k-1}^*$, $\underline{q}$ valeurs passées de $\beta_{ck-1}^*$ et $\underline{q}$ valeurs passées de $Y_{pk}^*$ (la valeur de $\underline{q}$ est ici de 2).

A ces séries de registres à décalage sont respectivement associés des éléments de sommation 29, 30 ou 31, adaptés à élaborer des "valeurs pré-filtrées" repérées par la lettre F en indice, avec $\underline{r}$ l'ordre du modèle d'état (ici 4) :

$$Y_{Fk-1}^* = d_1.Y_{k-1}^* + d_2.Y_{k-2}^* ... d_q.Y_{k-q}^* - [c_1.Y_{Fk-2}^* + C_2.Y_{Fk-3}^* + ... c_r.Y_{Fk-r-1}^*]$$

$$\beta_{cFk-1}^* = d_1\beta_{ck-1}^* + d_2.\beta_{ck-2}^* ... + d_q.\beta_{ck-q}^* - [c_1.\beta_{cFk-2}^* + c_2.\beta_{cFk-3}^* ... + c_r.\beta_{cFk-r-1}^*]$$

$$Y_{PFk}^* = d_1.Y_{Pk}^* + d_2.Y_{pk-1}^* ... + d_qY_{pk-q+1}^* - [c_1.Y_{PFk-1}^* + c_2.Y_{PFk-2}^* ... + c_r.Y_{PFk-r}^*]$$

Pour l'élaboration de ces valeurs pré-filtrées sont bien sûr prévues trois autres séries de registres à décalages 32 à 34 adaptées à garder en mémoire (r+1) valeurs passées de chacune des grandeurs pré-filtrées.

Les coefficient $d_1... d_q$ et $c_1... c_r$ de cet étage de pré-filtrage 18B ont été définis ci-dessus : ils dépendent de la partie statistique du modèle de comportement choisi et sont interpolés en ligne en fonction des valeurs des paramètres $A_6$ et $K_1$ estimés au pas d'avant par le module 19.

Ainsi que cela a été exposé ci-dessus, les coefficients $a'_1... b'_1... e_0... d_1...c_1 ...$ sont tels que l'on a la relation suivante :

$$Y_{pFk}^* = Y_{Fk-1}^*.A_6 + \beta_{cFk-1}^*.K_1 + e_k$$

où $e_k$ est un bruit de mesure.

Le module d'estimation paramétrique 19 comporte une unité de calcul d'innovation 35, une unité de calcul de gains 36, et une unité de recalage et de propagation 37.

Ce module d'estimation paramétrique a pour objet d'élaborer des valeurs estimées des paramètres $A_6$ et $K_1$ et est à rapprocher d'un filtre de KALMAN en raisonnant sur :

$$XX = \begin{vmatrix} A_6 \\ \dot{A}_6 \\ K_1 \\ K_1 \end{vmatrix}$$

L'unité de calcul d'innovation élabore une grandeur $\varepsilon_k$, appelée "innovation", donnée par l'équation:

$$\varepsilon_k = Y_{PFk}^* - HH.\widehat{XX}_{k/k-1}$$

où $\hat{XX}_{k/k-1}$ est la prédiction de XX donnée au pas d'avant par l'unité 37 (voir plus loin).

L'unité de calcul de gains 36 élabore (voir ci-dessus) le vecteur colonne K regroupant les quatre gains de filtrage respectivement affectés aux quatre composantes du vecteur colonne XX.

L'unité 37 élabore d'une part une valeur estimée du vecteur XX par l'équation :

$$\hat{XX}_{k/k} = \hat{XX}_{k/k-1} + K.\varepsilon k$$

et d'autre part une valeur prédite de $\hat{XX}$ pour le pas (k+1) par l'équation :

$$\hat{XX}_{k+1/k} = FF.\hat{XX}_{k/k}$$

laquelle valeur prédite va être stockée jusqu'au pas suivant.

A partir d'une table d'interpolation établie hors ligne on détermine à partir de $\hat{XX}_{k/k}$ les valeurs $d_1$...

$c_1$... à utiliser au pas suivant, tandis que la valeur estimée de $\hat{XX}_{k/k}$, , donc les valeurs de $\hat{A}_6$ et $\hat{K}_1$, sont transmises au module 20, tout en étant renvoyées au calculateur 9.

Le module 20 de génération de signaux d'excitation élabore en fréquence et en amplitude deux signaux sinusoïdaux d'excitation d'amplitudes $\varepsilon_1$ et $\varepsilon_2$ et de pulsations $\omega_1$ et $\omega_2$ à partir de $A_6$ et $K_1$, en utilisant les tables de correspondance préétablies correspondant aux abaques, données aux figures 5 à 13.

La détermination de ces signaux se fait par interpolation à partir d'une table $(A_6, K_1)$ $(\varepsilon_1, \varepsilon_2, \omega_1, \omega_2)$ établie hors ligne par itération du processus suivant :

1 - choix de $\omega_1$ (ou de $F_1$) sur la figure 5,

2 - détermination de $\omega_2$ (ou de $F_2$) en fonction de $\rho_{OP}$ (choisi à l'avance) grâce à l'abaque approprié de l'une des figures 8 à 10,

3 - calcul des gains Y, Z, $T_{OP}$,

4 - calcul de $b_2$ en fonction de l'énergie E choisie et de Y, Z, $T_{OP}$,

5 - calcul de $\varepsilon_1$, $\varepsilon_2$ en fonction de $b_2$, Y, Z, $T_{OP}$. Ces phases 3 à 5 font appel dans leur ensemble aux figures 11 et 12,

6 - calcul de $q_1$ et $q_2$ en fonction des trainages choisis,

7 - vérification de $q^2.\dfrac{\pi}{w} << \sqrt{2}\dfrac{q}{a}$ sinon retour à l'étape 2 en choisissant une autre valeur de $\omega_1$ et une autre valeur de $\rho_{OP}$.

8 - on retient les valeurs $\varepsilon_1$, $\varepsilon_2$, $\omega_1$, $\omega_2$.

Plus précisément, les étapes précitées peuvent être commentées comme suit :

- Etape 1 : choix de $\omega_1$

Les contraintes sur le choix de la première pulsation, correspondant à la plus petite pulsation ($\omega_1 < \omega_2$) sont principalement liées à la contrainte sur la borne minimum de $\omega_1$ :

1. Les basses fréquences seront coupées en temps réel par l'action du bloc "filtrage des données" 18. Cette action est rendue nécessaire pour éliminer les biais de l'algorithme d'identification dûs aux perturbations basses fréquences.

On considère que le filtrage optimal des basses fréquences (action DERIVATRICE) est un élément de fonctionnement indispensable de l'invention (certitude acquise par l'expérience).

2. La théorie de l'identification impose une contrainte faisant intervenir la pulsation $\omega_1$ de façon hyperbolique. Si cette contrainte n'est pas réalisée, on observe des oscillations parasites de fréquence double entraînant des détériorations sur les performances de l'invention.

- Etape 2 : calcul de $\omega_2$

On choisit une valeur $\rho$ optimisée : $\rho_{OP}$ égale à $\rho$ minimum, pour la valeur de $A_6$ considéré.

- Etape 3 : calcul des gains Y, Z, $T_{OP}$

Y, Z, $T_{OP}$ étant des fonctions des rapports des amplitudes des sinus donc sans dimension, on détermine $T_{OP}$, fonction de $\rho_{OP}$ uniquement, puis on détermine Y fonction de $w_1$ et $A_6$, Z fonction de Y et $T_{OP}$.

- Etape 4 : Calcul $b_2$

L'utilisateur fixant une énergie efficace E sur l'erreur en sortie, due au signal d'excitation, on en déduit une amplitude $b_2$, fonction de E, Y, Z, $T_{OP}$, qui attaque le filtre de KALMAN à nature d'observation périodique (HH périodique).

- Etape 5 : Calcul de $\varepsilon_1$, $\varepsilon_2$ :

En fonction de $b_2$, Y, Z, $T_{op}$, $A_6$, $K_1$, on détermine les amplitudes des 2 sinus de l'extra signal :

$$\eta = \varepsilon_1 \sin \omega_1 kT + \varepsilon_2 \sin \omega_2 kT$$

- Etape 6 : calcul de $q_1$ et $q_2$ en fonction des trainages tr spécifiés par le cahier des charges, dont dépendraient notamment, en temps réel, les gains du filtre d'identification 37 : tr décroît lorsque $q_1$ et $q_2$ croissent.
- Etape 7 : vérification

    $q_1$ et $q_2$ étant déterminés, on valide le choix en vérifiant les hypothèses de calcul ;
- Etape 8 : la validation théorique est satisfaisante, on mémorise alors dans la table d'interpolation destinée à être embarquée :

pour $A_6$ =        $\varepsilon_1$        $\Big\{$ les amplitudes
                   $\varepsilon_2$

pour $K_1$ =        $\omega_1$        $\Big\{$ les fréquences
                   $\omega_2$

$\underbrace{\text{entrées de la table d'interpolation}}$        $\underbrace{\text{sorties de la table d'interpolation}}$

- Retour à l'étape 2 : autre choix

    Si la cause de non-validation est : covariances trop importantes entraînant une forte influence des bruits :

a) alors on se fixe un autre $\rho_{OP}$ inférieur ($\rho_{OP} \approx 0,7$ par exemple),

b) on augmente le domaine de fréquence ($\omega_2$ croît) ($\omega_1$ décroît),

c) on augmente l'énergie E en sortie.

Si l'hypothèse de l'étape 7 est non validée, alors :

a). on augmente $\omega_1$, mais avec toujours $\omega_1 < \omega_2$

b). on diminue $q_1$, et $q_2$.

Dans le cas de deux paramètres à identifier, on peut se contenter de 2 sinusoïdes de fréquences entre 1,0 et 12,0 hertz environ (très inférieures à la fréquence d'échantillonnage) et d'amplitude 0,01 radian (0,5 degré) environ (l'amplitude est réglable à volonté selon les erreurs d'identification désirées hors ligne).

A titre d'exemple d'utilisation des abaques pour l'élaboration hors ligne de la table d'interpolation, on part d'une valeur de $A_6$ égale à 10 et on se fixe à l'avance une valeur $\rho_{OP} = 0,75$.

Ce paramètre doit être le plus faible possible sans toutefois conduire à des fréquences trop élevées pour le vérin (à la figure 8, une fréquence $F_1 = 1,1$ Hz et $\rho = 0,5$ conduisent à $F_2 = 4,8$ Hz ; or il est apparu préférable dans le cas considéré de rester en deçà de 3 Hz. Le choix de $\rho = 0,75$ semble un compromis acceptable. En fait, le choix de ce coefficient de couplage dépend du modèle physique et de la plage permise physiquement pour les fréquences $F_1$ et $F_2$.

On choisit pour commencer une fréquence $F_1$ de 1,1 Hz, ce qui correspond au gain maximum d'après la figure 6 : cela veut dire que les fréquences voisines de 1,1 Hz sont moins bruitées que les autres. Pour des fréquences inférieures ($< 0,5$ Hz) le vent devient prépondérant et son élimination se traduit par une action dérivatrice du préfiltrage ; pour 0,5 Hz l'extra-signal serait noyé dans le vent. Pour des fréquences plus hautes ($> 6$ Hz) le bruit de mesure devient prépondérant ce qui se traduit par une atténuation sérieuse des hautes fréquences par le préfiltrage ; cette atténuation ne peut toutefois pas être totale car on a toujours besoin de la mesure pour recaler le modèle au moyen du processus d'innovation. Ces remarques concernent $Y^*_{Fk-1}$ mais des remarques similaires pourraient être faites à propos de $\beta^*_{Fck-1}$ (figure 6). A titre de grandeur, le vent peut avoir une fréquence de 0,1 Hz tandis que le bruit de mesure peut se situer autour de 5 Hz ; le ballottement des liquides dans un engin propulsé peut être d'environ 1 Hz. On en déduit à la figure 8 une fréquence $F_2 = 2,6$ Hz.

Pour déterminer $\varepsilon_1$ on sélectionne la figure 11 qui correspond à $F_1 = 1,1$ Hz : le bruit de la courbe $A_6 = 10$ qui correspond à $F_2$ donne $\varepsilon_1 = 0,019$ rd. La planche 12 donne de manière similaire $\varepsilon_2 = 0,086$ rd.

Si on prend par exemple un temps de 11 secondes. cela correspond à un extra-signal de 0,35 degré.

Il reste à contrôler les valeurs de traînage : la figure 13 donne un traînage de 18 sur $A_6$ et de -19 sur $K_1$. Si ces valeurs sont considérées acceptables, on valide les grandeurs précitées pour $A_6 = 10$ dans la table d'interpolation.

Des démarches similaires doivent être suivies pour d'autres valeurs possibles de $A_6$ dans une gamme de valeurs estimée a priori. Le nombre des valeurs possibles qui sont ainsi considérées pour $A_6$ résulte d'un compromis entre la précision désirée et la taille admise pour la table d'interpolation à embarquer.

Le choix de l'énergie maximale d'excitation en sortie résulte du cahier des charges : plus elle est faible, plus le niveau pour $\varepsilon_1$ et $\varepsilon_2$ est faible et les traînages seront probablement importants. Une énergie correspondant à une plage d'oscillation en tangage de quelques degrés (par exemple entre 0.5 et 2) peut être considérée comme raisonnable.

Il est à noter que l'utilisation d'une table d'interpolation ainsi construite garantit le maintien des traînages dans des plages spécifiées à l'avance.

Avant de transmettre les extra-signaux au sommateur le module procède à des tests de faisabilité.

Il vérifie que les excitations sont inférieures à la différence entre la valeur de commande $\beta_{ck}$ et $\beta_{max}$ la valeur maximale admissible par l'actionneur, sinon il réduit l'amplitude de ces excitations à cette différence ou, de préférence, à une fraction (par exemple 90 %) de celle-ci. De même, il vérifie que la différence de braquage par rapport au pas d'avant est compatible avec les performances en vitesse de l'actionneur sinon on diminue les amplitudes.

Ce n'est qu'alors que l'on ajoute effectivement en 15 ces signaux d'excitation au signal de commande élaboré par l'unité de pilotage 5.

Des simulations ont permis d'établir la faisabilité et la fiabilité de l'invention, même dans des cas de manoeuvres importantes qui, dans des solutions classiques, auraient conduit à la perte de l'engin.

Dans le cas où l'on suppose $K_1$ suffisamment bien connu, on peut se limiter à une seule fréquence d'excitation, et la démarche à suivre, simplifiée, se déduit aisément de ce qui précède.

L'amélioration apportée par l'invention peut aller jusqu'à la sauvegarde de l'engin (reconfiguration du modèle de connaissance après un effacement accidentel de certaines mémoires du calculateur de guidage pilotage), c'est-à-dire que l'utilisation de ce procédé peut être l'unique solution, à l'heure actuelle, pour un fonctionnement correct de l'engin.

La méthode peut s'appliquer sur n'importe quel système stabilisable, du moment que l'on peut disposer d'une commande pouvant être réglée en fréquence et en amplitude.

Il suffit simplement de déterminer les paramètres jugés essentiels pour la stabilité du contrôle automatique.

Les avantages pratiques et les intérêts industriels sont essentiellement :
- module s'ajoutant en parallèle sur le calculateur de guidage/pilotage et ne nécessitant aucune modification importante du matériel déjà existant.
- souplesse d'utilisation du procédé qui peut s'utiliser sur n'importe quel système du 2ème ordre à asservissement numérique.
- nombre limité de calculs numériques supplémentaires n'introduisant donc qu'un petit retard dans la chaîne de contrôle de l'engin pratiquement parfaitement tolérable.
- possibilité de couper le fonctionnement du module en vol sans problème majeur pour le contrôle qui gardera en mémoire les derniers paramètres recalés.
- fiabilité des contrôles avant vol via le bus : on excite par émulation et on vérifie le bon fonctionnement du module.

Dans le cas où plusieurs asservissements seraient prévus selon des dégrés de liberté différents, on peut appliquer l'invention indépendamment pour chaque degré de liberté. En variante, on peut n'appliquer l'invention que sur un seul degré de liberté, en reportant autant que possible l'ensemble des effets perturbateurs sur celui-ci.

Il va de soi que la description qui précède n'a été proposée qu'à titre d'exemple non limitatif et que de nombreuses variantes peuvent être proposées par l'homme de l'art sans sortir du cadre de l'invention.

En effet, l'exposé qui précède correspond à un optimum.

Il a toutefois été constaté lors de simulations que de bons résultats lorsque, après calcul en 18A des pseudo-grandeurs, on se contente d'un préfiltrage selon un simple polynôme du premier degré en $q_{-1}$, de coefficients égaux à 1 par exemple.

Par ailleurs, il a été exposé ci-dessus comment déterminer de manière optimale les amplitudes et pulsations des extra-signaux à partir de l'efficacité et de la radeur. De bons résultats sont déjà obtenus lorsque l'on n'estime qu'un seul paramètre, par exemple la raideur, en supposant l'autre paramètre suffisamment bien connu. On peut alors n'utiliser qu'une seule composante harmonique dont la pulsation est, selon le cas, choisie auprès des pics des courbes de l'une ou l'autre des figures 6 ou 7 (par exemple les courbes de la figure 6) et dont l'amplitude est fixée par le niveau maximum d'énergie d'excitation choisie à l'avance. Si l'on souhaite utiliser deux composantes harmoniques, on peut choisir des critères de couplage plus simples et plus approchés que précédemment : on peut par exemple se contenter de lire les pulsations sur les lignes 6 et 7 en imposant une différence minimale entre celles-ci. Il est rappelé que ces courbes des figures 6 et 7 ne sont pas embarquées mais servent de base à la constitution de la table d'interpolation embarquée dans l'élément 8.

## Revendications

1. Procédé de commande en pilotage en régime discret d'un système physique dont une grandeur de sortie $\theta$ est commandée par une grandeur $\beta$ appliquée à un actionneur selon une loi de commande synthétisée à partir d'une équation différentielle linéaire du second ordre :

$$\ddot{\theta} = A_6 . \theta + K_1 \beta + \varepsilon$$

où $A_6$ est un paramètre appelé raideur,

$K_1$ est un paramètre appelé efficacité,

$\varepsilon$ est un terme de perturbation stochastique, l'un au moins des paramètres $A_6$ et $K_1$, étant mal connu, selon lequel on relève, avec une période d'échantillonnage T, des mesures $Y_k$ de la grandeur de sortie $\theta$ tandis que l'on élabore dans un calculateur des signaux de commande $\beta_{ck}$ que l'on applique à l'actionneur, et selon lequel on décrit le comportement du système par une relation matricielle $\dot{X} = AX + B.\beta_c + W$ où X est un vecteur regroupant au moins $\theta$, $\beta$ et leurs dérivés et où W est un bruit blanc, caractérisé en ce que :

. préalablement au pilotage :

- on établit une relation paramétrique linéaire en les paramètres $A_6$ et $K_1$ du type :

$$E\,(q^{-1}).Y_k = A'(q^{-1}).Y_k.A_6 + N'(q^{-1}).\beta_{ck}.K_1 + \frac{C(q^{-1})}{D(q^{-1})} . e_k$$

où :

. $e_k$ est le processus d'innovation résultant d'un filtre de KALMAN fondé sur ladite équation matricielle de comportement,

. $E(q^{-1})$, $A'(q^{-1})$, $N'(q^{-1})$ sont des polynômes de l'opérateur retard $q^{-1}$, d'ordres au plus égaux à la dimension du vecteur X,

. $C(q^{-1})$ est le polynôme caractéristique dudit filtre de KALMAN,

. $D(q^{-1})$ est le polynôme caractéristique des modes non commandables excités par W.

- on calcule les valeurs des coefficients constants $e_1$ de $E(q^{-1})$, $a'_1$ de $A'(q^{-1})$, $b'_1$ de $N'(q^{-1})$,

- on estime une plage de valeurs possibles pour ce paramètre mal connu au cours du pilotage,

- on construit une table d'interpolation donnant pour plusieurs de ces valeurs possibles l'amplitude $\varepsilon_1$ et la puisation $\omega_1$ d'au moins une composante harmonique à introduire par addition dans le signal de commande.

- on choisit un modèle de variation pour au moins le paramètre supposé mal connu que l'on écrit sous la forme

$$\dot{XX} = AA.XX + e$$

où XX est un vecteur de dimension au moins égale à 1 et on établit une équation de RICCATI discrète fondée sur ce modèle paramétrique et sur la relation paramétrique linéaire,

. au cours du pilotage :

- on calcule (18A) à chaque instant

$$Y^*_{pk} = E(q^{-1}).Y_k$$

$$Y^*_{k-1} = A'(q^{-1}).Y_k$$

$$\beta^*_{ck} = N'(q^{-1}).\beta_{ck}$$

- on préfiltre (18B) chacune de ces grandeurs par un polynôme d'ordre au moins égal à 1,

- on identifie à partir de ces valeurs préfiltrées, qui satisfont

$$Y^*_{pFk} = Y^*_{Fk-1}.A_6 + \beta^*_{Fck-1}.K_1 + e_k$$

les coefficients de l'équation de RICCATI et on estime (19) le(s) paramètre(s) mal connu(s) que l'on transmet ensuite au calculateur,

- on déduit de la table d'interpolation (20) une pulsation d'excitation $\omega_1$ et une amplitude d'excitation $\varepsilon_1$ pour cette valeur estimée du paramètre,

- on ajoute au signal de commande du calculateur la composante harmonique de pulsation $\omega_1$ et d'amplitude $\varepsilon_1$, et on applique cette somme de signaux à l'actionneur.

2. Procédé selon la revendication 1, caractérisé en ce que le paramètre mal connu est la raideur $A_6$.

3. Procédé selon la revendication 1 ou la revendication 2, caractérisé en ce que, avant le pilotage, on construit cette table d'interpolation en sorte de lui faire associer à diverses valeurs possibles au moins ce paramètre, les amplitudes et les pulsations de deux composantes harmoniques de fréquences différentes, et en ce que, au cours du pilotage, on détermine par interpolation à partir d'au moins la valeur estimée de ce paramètre des amplitudes $\varepsilon_1$ et $\varepsilon_2$ et des pulsations $\omega_1$ et $\omega_2$, et on ajoute au signal de commande du calculateur des composantes harmoniques de pulsations $\omega_1$ et $\omega_2$ et d'amplitudes $\varepsilon_1$ et $\varepsilon_2$.

4. Procédé selon l'une quelconque des revendications 1 à 3, caractérisé en ce que la table d'interpolation admet également l'autre paramètre comme grandeur d'entrée.

5. Procédé selon la revendication 4, caractérisé en ce qu'on estime également cet autre paramètre.

6. Procédé selon l'une quelconque des revendications 1 à 5, caractérisé en ce qu'on contrôle que l'amplitude du signal de commande incorporant cette (ou ces) composante(s) harmonique(s) est inférieure à un seuil prédéterminé, et, si oui, on applique ces composantes harmoniques à l'actionneur ou, si non, on réduit l'amplitude de cette (ou ces) composante(s) harmonique(s) en sorte de rester en deça dudit seuil.

7. Procédé selon l'une quelconque des revendications 1 à 6, caractérisé en ce qu'on contrôle que l'amplitude du signal de commande incorporant cette (ou ces) composante(s) harmonique(s) présente, par rapport à celle du pas d'avant, une différence inférieure à un seuil prédéterminé et, si oui, on applique ces composantes harmoniques à l'actionneur ou, si non, on réduit l'amplitude de cette (ou ces) composante(s) harmonique(s) en sorte de rester en deça dudit seuil.

8. Procédé selon l'une quelconque des revendications 1 à 7, caractérisé en ce que le modèle de variation du (ou des) paramètre(s) est du premier ordre.

9. Procédé selon l'une quelconque des revendications 1 à 7, caractérisé en ce que le modèle de variation du (ou des) paramètre(s) est du second ordre, le vecteur paramétrique incorporant la dérivée par rapport au temps de chaque paramètre à estimer.

10. Procédé selon l'une quelconque des revendications 1 à 9, caractérisé en ce qu'on préfiltre chacune des grandeurs $Y_{pk}^{*}$, $Y_{k-1}^{*}$ et $\beta_{ck-1}^{*}$ par une forme approchée du rapport des polynômes $D(q^{-1})/C(q^{-1})$ dont on détermine à chaque pas la valeur des coefficients en fonction du (ou des) paramètre(s) estimés(s).

11. Procédé selon l'une quelconque des revendications 1 à 10, caractérisé en ce que le système à piloter est un engin aérodynamique à chaîne de pilotage incorporée.

12. Procédé selon la revendication 11, caractérisé en ce que les signaux de commande sont appliqués à des gouvernes.

13. Procédé selon la revendication 12, caractérisé en ce que les signaux de commande sont appliqués au vérin d'orientation d'une tuyère de poussée.

**Patentansprüche**

1. Verfahren zur Steuerung eines physikalischen Systems in diskretem Betrieb, das eine Ausgangsgröße $\vartheta$ besitzt, die durch eine an ein Betätigungsorgan angelegte Größe $\beta$ gemäß einer Steuergesetzmäßigkeit gesteuert wird, die ausgehend von einer linearen Differentialgleichung der zweiten Ordnung

$$\ddot{\vartheta} = A_6 . \vartheta + K_1 \beta + \varepsilon$$

synthetisiert wird, in der
$A_6$ ein Steilheit genannter Parameter ist,
$K_1$ ein Wirksamkeit genannter Parameter ist,
$\varepsilon$ ein stochastisches Störungsglied ist,
wobei wenigstens einer der Parameter $A_6$ und $K_1$ schlecht bekannt ist, gemäß welchem man mit einer Abtastperiode T Messungen $Y_k$ der Ausgangsgröße $\vartheta$ vornimmt, während man in einem Rechner Steuersignale $\beta_{ck}$ herstellt, die man an ein Betätigungsorgan anlegt, und gemäß welchem man das Verhalten des Systems durch eine Matrixbeziehung $\dot{X} = AX + B.\beta_c + W$ beschreibt, in der X ein Vektor, in dem wenigstens

18

$\vartheta$, $\beta$ und ihre Ableitungen zusammengefaßt sind, und in der W ein weißes Rauschen ist, dadurch gekennzeichnet, daß

. vor der Steuerung:

- eine lineare Parameterbeziehung in den Parametern $A_6$ und $K_1$ vom Typ

$$E\,(q^{-1}).Y_k \;=\; A'(q^{-1}).Y_k.A_6 \;+\; N'(q^{-1}).\beta_{ck}.K_1 \;+\; \frac{C(q^{-1})}{D(q^{-1})}\,.\,e_k$$

aufgestellt wird, in der:

. $e_k$ der Innovationsprozess ist, der sich aus einem KALMAN-Filter ergibt, das auf dieser Verhaltens-Matrixgleichung beruht,

. $E(q^{-1})$, $A'(q^{-1})$, $N'(q^{-1})$ Polynome des Verzögerungsoperators $q^{-1}$ von Ordnungen von höchstens gleich der Größe des Vektors X sind,

. $C(q^{-1})$ das charakteristische Polynom dieses KALMAN-Filters ist,

. $D(q^{-1})$ das charakteristische Polynom der durch W erregten nicht steuerbaren Moden ist,

- die Werte der konstanten Koeffizienten $e_1$ von $E(q^{-1})$, $a'_1$ von $A'(q^{-1})$, $b'_1$ von $N'(q^{-1})$ errechnet werden,

- ein Bereich von möglichen Werten für diesen während der Steuerung schlecht bekannten Parameter geschätzt wird,

- eine Interpolationstabelle konstruiert wird, die für mehrere dieser Werte die Amplitude $\varepsilon_1$ und die Schwingung $\omega_1$ von wenigstens einer harmonischen Komponente ergibt, die durch Addition in das Steuersignal einzuführen ist,

- ein Änderungsmodell für wenigstens den als schlecht bekannt angenommenen Parameter gewählt wird, das in der Form

$$\dot{XX} \;=\; AA.XX \;+\; e$$

geschrieben wird, worin XX ein Vektor von der Größe von wenigstens gleich 1 ist, und eine diskrete RICCATI-Gleichung aufgestellt wird, die auf diesem Parametermodell und auf der linearen Parametergleichung beruht,

. während der Steuerung:

- zu jedem Zeitpunkt
$$Y^*_{pk} = E(q^{-1}).Y_k$$
$$Y^*_{k-1} = A'(q^{-1}).Y_k$$
$$\beta^*_{ck} = N'(q^{-1}).\beta_{ck}$$
errechnet wird (18A)

- jede dieser Größen durch ein Polynom von der Ordnung von wenigstens gleich 1 vorgefiltert wird (18B),

- ausgehend von diesen vorgefilterten Werten, die
$$Y^*_{pfk} \;=\; Y^*_{fk-1}.A_e \;+\; \beta^*_{fck-1}.K_1 \;+\; e_k$$
erfüllen, die Koeffizienten der RICCATI-Gleichung identifiziert werden und der bzw. die schlecht bekannten Parameter geschätzt werden (19), die anschließend in den Rechner übertragen werden,

- aus der Interpolationstabelle (20) eine Erregungsschwingung $\omega_1$ und eine Erregungsamplitude $\varepsilon_1$ für diesen geschätzten Wert des Parameters abgeleitet wird,

- dem Steuersignal des Rechners die harmonische Komponente der Schwingung $\omega_1$ und der Amplitude $\varepsilon_1$ hinzugefügt wird und diese Signalsumme an das Betätigungsorgan angelegt wird.

2. Verfahren nach Anspruch 1, dadurch gekennzeichnet, daß der schlecht bekannte Parameter die Steilheit $A_e$ ist.

3. Verfahren nach Anspruch 1 oder 2, dadurch gekennzeichnet, daß vor der Steuerung diese Interpolationstabelle konstruiert wird, so daß man sie verschiedenen möglichen Werten wenigstens dieses Parameters die Amplituden und die Schwingungen von zwei harmonischen Komponenten mit verschiedenen Frequenzen zuordnen läßt, und daß man während der Steuerung durch Interpolation, ausgehend von wenigstens dem geschätzten Wert dieses Parameters, Amplituden $\varepsilon_1$ und $\varepsilon_2$ und Schwingungen $\omega_1$ und $\omega_2$ bestimmt und dem Steuersignal des Rechners harmonische Komponenten der Schwingungen $\omega_1$ und $\omega_2$ und Amplituden $\varepsilon_1$ und $\varepsilon_2$ beigibt.

4. Verfahren nach einem der Ansprüche 1 bis 3, dadurch gekennzeichnet, daß die Interpolationstabelle auch den anderen Parameter als Eingangsgröße zuläßt.

**5.** Verfahren nach Anspruch 4, dadurch gekennzeichnet, daß auch dieser andere Parameter geschätzt wird.

**6.** Verfahren nach einem der Ansprüche 1 bis 5, dadurch gekennzeichnet, daß man kontrolliert, ob die Amplitude des diese harmonische(n) Komponente(n) beinhaltenden Steuersignals kleiner als eine vorbestimmte Schwelle ist, und, wenn ja, diese harmonischen Komponenten an das Betätigungsorgan angelegt werden oder, wenn nicht, die Amplitude dieser harmonischen Komponente(n) verringert wird, so daß sie diesseits dieser Schwelle bleibt.

**7.** Verfahren nach einem der Ansprüche 1 bis 6, dadurch gekennzeichnet, daß kontrolliert wird, ob die Amplitude des diese harmonische(n) Komponente(n) beinhaltenden Steuersignals gegenüber der des vorhergehenden Schritts eine Differenz besitzt, die unter einer vorbestimmten Schwelle liegt, und, wenn ja, diese harmonischen Komponenten an das Betätigungsorgan angelegt werden, oder, wenn nicht, die Amplitude dieser harmonischen Komponente(n) verringert wird, so daß sie diesseits dieser Schwelle bleibt.

**8.** Verfahren nach einem der Ansprüche 1 bis 7, dadurch gekennzeichnet, daß das Modell der Änderung des oder der Parameter der ersten Ordnung ist.

**9.** Verfahren nach einem der Ansprüche 1 bis 9, dadurch gekennzeichnet, daß das Modell der Änderung des oder der Parameter der zweiten Ordnung ist, wobei der Parametervektor die Ableitung jedes zu schätzenden Parameters bezüglich der Zeit enthält.

**10.** Verfahren nach einem der Ansprüche 1 bis 9, dadurch gekennzeichnet, daß jede der Größen $Y*_{pk}$, $Y*_{k-1}$ und $\beta*_{ck-1}$ durch eine angenäherte Form des Verhältnisses der Polynome $D(q^{-1})/C(q^{-1})$ vorgefiltert wird, von dem man bei jedem Schritt den Wert der Koeffizienten in Abhängigkeit von dem oder den geschätzten Parametern bestimmt.

**11.** Verfahren nach einem der Ansprüche 1 bis 10, dadurch gekennzeichnet, daß das zu steuernde System ein ärodynamisches Fahrzeug mit eingegliederter Steuerkette ist.

**12.** Verfahren nach Anspruch 11, dadurch gekennzeichnet, daß die Steuersignale an Ruder angelegt werden.

**13.** Verfahren nach Anspruch 12, dadurch gekennzeichnet, daß die Steuersignale an den Richtzylinder einer Schubdüse angelegt werden.

## Claims

**1.** Discrete control process for a physical system of which an output magnitude $\theta$ is controlled by a magnitude $\beta$ applied to an actuator on the basis of a control law synthesised from second order linear differential equation:

$$\ddot{\theta} = A_6 . \theta + K_1 \beta + \varepsilon$$

where $A_6$ is a stiffness parameter,
$K_1$ is an efficiency parameter,
$\varepsilon$ is a stochastic disturbance term, at least one of the parameters $A_6$ and $K_1$ being inaccurately known, in which method measured values $Y_k$ of the output magnitude $\theta$ are obtained with a sampling period T and a computer generates control signals $\beta_{ck}$ which are applied to the actuator, and in which system the behaviour of the system is described by a matrix equation $\dot{X} = Ax + B.\beta_c + W$ in which X is a vector combining at least $\theta$, $\beta$ and their derivatives and W is white noise, characterised in that:

. prior to control:

- a linear parametric relationship is established between the parameters $A_6$ and $K_1$ of the type:

$$E (q^{-1}).Y_k = A'(q^{-1}).Y_k.A_6 + N'(q^{-1}).\beta_{ck}.K_1 + \frac{C(q^{-1})}{D(q^{-1})} . e_k$$

in which:

. $e_k$ is the innovation process resulting from the application of a KALMAN filter based on said matrix behaviour equation,

. $E(q^{-1})$, $A'(q^{-1})$, $N'(q^{-1})$ are polynomials of the delay operator $q^{-1}$, the orders of which are at most equal to the dimension of the vector X,

. $C(q^{-1})$ is the characteristic polynomial of said KALMAN filter,

. $D(q^{-1})$ is the characteristic polynomial of the uncontrollable modes excited by W,

- the values of the constant coefficients $e_1$ of $E(q^{-1})$, $a'_1$ of $A'(q^{-1})$, and $b'_1$ of $N'(q^{-1})$ are computed,
- a range of possible values is estimated for the inaccurately known parameter during control,
- an interpolation table is constructed giving for a plurality of said possible values the amplitude $\varepsilon_1$ and the angular frequency $\omega_1$ of at least one harmonic component to be added into the control signal,
- a variation model is chosen for at least the inaccurately known parameter and written in the form

$$\dot{XX} = AA.XX + e$$

in which XX is an at least one-dimensional vector, and a discrete RICCATI equation is drawn up on the basis of this parametric model and on the basis of the linear parametric equation,

. during control:

- the following are calculated continuously (18A):

$$Y_{pk}^* = E(q^{-1}).Y_k$$

$$Y_{k-1}^* = A'(q^{-1}).Y_k$$

$$\beta_{ck}^* = N'(q^{-1}).\beta_{ck}$$

- each of these magnitudes is pre-filtered (18B) using an at least first order polynomial,
- the coefficients of the RICATTI equation are identified from the pre-filtered values which satisfy the equation

$$Y_{pFk}^* = Y_{Fk-1}^*.A_6 + \beta_{Fck-1}^*.K_1 + e_k$$

and the inaccurately known parameter or parameters is or are then estimated (19) and sent to the computer,

- an excitation angular frequency $\omega_1$ and an excitation amplitude $\varepsilon_1$ are deduced for this estimated value of the parameter from the interpolation table,
- the harmonic component with angular frequency $\omega_1$ and amplitude $\varepsilon_1$ is added to the control signal of the computer and the summed signals are applied to the actuator.

2. Method according to claim 1 characterised in that the inaccurately known parameter is the stiffness $A_6$.

3. Method according to claim 1 or claim 2 characterised in that, before control, the interpolation table is constructed so that it establishes the association with at least some possible values of this parameter and the amplitudes and the angular frequencies of two different frequency harmonic components, and in that, during control, amplitudes $\varepsilon_1$ and $\varepsilon_2$ and angular frequencies $\omega_1$ and $\omega_2$ are determined by interpolation from at least the estimated value of this parameter and harmonic components with angular frequencies $\omega_1$ and $\omega_2$ and amplitudes $\varepsilon_1$ and $\varepsilon_2$ are added to the control signal of the computer.

4. Method according to any one of claims 1 through 3 characterised in that the interpolation table accepts also the other parameter as an input magnitude.

5. Method according to claim 4 characterised in that said other parameter is also estimated.

6. Method according to any one of claims 1 through 5 characterised in that the amplitude of the control signal incorporating said harmonic component or components is compared with a predetermined threshold and if it is lower than same said harmonic components are applied to the actuator and if it is not lower than same the amplitude of said harmonic component or components is or are reduced so as to remain below said threshold.

7. Method according to any one of claims 1 through 6 characterised in that the amplitude of the control signal incorporating said harmonic component or components is compared with that for the previous step to determine if the difference is less than a predetermined threshold and, if it is less than said predetermined threshold, said harmonic components are applied to the actuator and, if it is not less than said predetermined threshold, the amplitude of said harmonic component or components is or are reduced so as to remain below said threshold.

8. Method according to any one of claims 1 through 7 characterised in that the variation model of the parameter or parameters is a first order model.

9. Method according to any one of claims 1 through 7 characterised in that the variation model of the parameter or parameters is a second order model, the parametric vector incorporating the time derivative of each parameter to be estimated.

10. Method according to any one of claims 1 through 9 characterised in that each of the magnitudes $Y_{pk}^*$, $Y_{k-1}^*$ and $\beta_{ck-1}^*$ is pre-filtered by applying an approximate form of the ratio of the polynomials $D(q^{-1})/C(q^{-1})$ from which is determined on each step the value of the coefficients on the basis of the estimated parameter or parameters.

11. Method according to any one of claims 1 through 10 characterised in that the system to be controlled is an aerodynamic craft with a built-in control system.

12. Method according to claim 11 characterised in that the control signals are applied to control surfaces.

13. Method according to claim 12 characterised in that the control signals are applied to an actuator orienting a propulsion system nozzle.

FIG.1

**FIG. 2**

FIG.3

FIG. 4

FIG.5

FIG.6

FIG.7

FIG.8

FIG.9

FIG.10

FIG. 11

FIG.12

FIG.13